(19) 

Europäisches Patentamt
European Patent Office
Office européen des brevets

(11) **EP 4 234 902 B1**

(12) **EUROPEAN PATENT SPECIFICATION**

(45) Date of publication and mention
of the grant of the patent:
**05.03.2025 Bulletin 2025/10**

(21) Application number: **23175621.4**

(22) Date of filing: **19.01.2021**

(51) International Patent Classification (IPC):
*F01N 3/021* (2006.01)     *F01N 3/10* (2006.01)
*F01N 3/20* (2006.01)       *F01N 9/00* (2006.01)
*F01N 13/00* (2010.01)     *F02D 41/00* (2006.01)
*F02D 41/02* (2006.01)     *F02D 41/06* (2006.01)
*F02D 41/14* (2006.01)

(52) Cooperative Patent Classification (CPC):
**F01N 3/2006; F01N 9/00; F02D 41/024;**
**F02D 41/068; F02D 41/1441;** F01N 3/021;
F01N 3/2013; F01N 3/2033; F01N 3/2066;
F01N 13/009; F01N 2240/16; F01N 2430/00;
F01N 2560/026; F01N 2560/06; F01N 2560/14;
(Cont.)

(54) **SYSTEMS AND METHODS FOR THERMAL MANAGEMENT OF AFTERTREATMENT SYSTEMS**

SYSTEME UND VERFAHREN ZUM THERMOMANAGEMENT VON
NACHBEHANDLUNGSSYSTEMEN

SYSTÈMES ET PROCÉDÉS DE GESTION THERMIQUE DE SYSTÈMES DE POST-TRAITEMENT

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**30.08.2023 Bulletin 2023/35**

(62) Document number(s) of the earlier application(s) in
accordance with Art. 76 EPC:
**21152288.3 / 4 030 041**

(73) Proprietor: **Cummins Emission Solutions Inc.**
**Columbus, IN 47201 (US)**

(72) Inventors:
• **Gong, Jinqian**
**Columbus, Indiana, 47201 (US)**
• **Mohanty, Rakesh**
**Columbus, Indiana, 47201 (US)**
• **Brahma, Avra**
**Fishers, Indiana, 46037 (US)**

(74) Representative: **Hoffmann Eitle**
**Patent- und Rechtsanwälte PartmbB**
**Arabellastraße 30**
**81925 München (DE)**

(56) References cited:
**DE-A1- 102005 013 707     DE-A1- 102012 007 053**
**DE-A1- 102018 217 169     DE-B3- 102019 215 698**
**US-A1- 2019 155 230        US-A1- 2020 408 163**

(52) Cooperative Patent Classification (CPC): (Cont.)
F01N 2900/0422; F01N 2900/0602; F01N 2900/08;
F01N 2900/1602; F01N 2900/1621;
F01N 2900/1631; F02D 41/1446; F02D 41/1454;
F02D 41/146; F02D 2200/0802; Y02T 10/12

**Description**

TECHNICAL FIELD

The present disclosure relates generally to aftertreatment systems for used with internal combustion engines.

BACKGROUND

Exhaust aftertreatment systems are used to receive and treat exhaust gas generated by engines such as IC engines. Conventional exhaust gas aftertreatment systems include any of several different components to reduce the levels of harmful exhaust emissions present in exhaust gas. For example, certain exhaust aftertreatment systems for diesel-powered IC engines includes a selective catalytic reduction (SCR) system formulated to convert $NO_X$ (NO and $NO_2$ in some fraction) into harmless nitrogen gas ($N_2$) and water vapor ($H_2O$) in the presence of ammonia ($NH_3$).

Generally, a reductant such as a diesel exhaust fluid (e.g., an aqueous urea solution) is inserted into the aftertreatment system as a source of ammonia. The reductant facilitates the decomposition of the constituents of the exhaust gas by the SCR system. The reductant may also be deposited on the SCR system. The SCR system needs to operate at a sufficient temperature for efficient decomposition of the $NO_X$ gases to meet emission requirements. If the temperature of the SCR system is not sufficiently high, the SCR system may not be able to effectively convert $NO_X$ gases into its constituents, which leads to high $NO_X$ emissions from the exhaust system. Particularly, at engine startup, the temperature of the SCR system and other components of the aftertreatment system does not increase at a sufficient rate, which can lead to high NOX emissions until the SCR system is sufficiently warmed up.

DE 10 2005 013707 A1 relates to a motor vehicle with an air-compressing engine and an exhaust system comprising an oxidation catalyst, a particle filter and a nitrogen oxide conversion catalyst, and a heating element on the inlet side of the oxidation catalyst or of the oxide conversion catalyst. US 2020/408163 A1 relates to a method comprising warm idling an internal combustion engine; reducing a volumetric flow rate of air through the engine; increasing a mechanical load to the engine; and inputting energy from a source of electrical energy into the exhaust. US 2019/155230 relates to a control system including an electric heater disposed within an exhaust fluid flow pathway, and a control device for modulating power to the heater such that the heater provides different power output and a continuously variable power output during operation of the exhaust system. DE 10 2019 215698 B3 relates to a method for preheating a catalytic converter. DE 10 2018 217169 A1 relates to a control system for the regeneration of a particle filter of an internal combustion engine of a hybrid vehicle, wherein a temperature difference between a target regeneration temperature and the actual temperature of the particle filter is determined. In DE 10 2012 007053, an internal combustion engine comprises an exhaust system including a catalytic converter heated with a target heating power determined based on a specified temperature.

SUMMARY

Embodiments described herein relate generally to systems and methods for thermal management of aftertreatment systems. In particular, the systems and methods described herein perform real time thermal management of each component of the aftertreatment system that includes a heater, based on target temperatures of all components of the aftertreatment system, by determining additional energy needed to heat up each component to its target temperature, determining total additional power needed from the engine to obtain the additional energy needed, and scheduling additional power request from the engine for powering at least the heater so as to prevent each aftertreatment component from overshooting its target temperature.

In some embodiments, a controller for thermal management of an aftertreatment system that comprises a heater and an aftertreatment component downstream of the heater, the aftertreatment system being coupled to an engine that generates an exhaust gas, the controller configured to: determine an estimated warm-up time for warming up the aftertreatment component to a target temperature via the heater; and activate the heater; characterized in that the controller is further configured to: divide the estimated warm-up time into a plurality of long time windows; determine a target temperature change rate within each long time window; divide at least one long time window of the plurality of long time windows into a plurality of short time windows; determine a target energy change rate within each short time window for achieving the target temperature change rate over the at least one long time window; determine an additional power needed from the engine for powering the heater based on a target energy of the aftertreatment component within each short time window; and transmit a signal to the engine to request the additional power needed from the engine.

In some embodiments, a method for thermal management of an aftertreatment system using a controller according to the present disclosure, the aftertreatment system comprising a heater and an aftertreatment component disposed downstream of the heater, the aftertreatment system being coupled to an engine that generates an exhaust gas, the method comprising: determining, by a controller, an estimated warm-up time for warming up the aftertreatment component to a target temperature via the heater; activating, by the controller, the heater; characterized in that the method further comprises: dividing, by the controller, the estimated warm-up time into a plurality of long time windows; determining, by the controller, a target temperature change rate within each long time window; dividing, by the controller, at least one long time window of the plurality of long time windows into a plurality of short time windows; determining, by the controller, a target energy change rate within each short time window for achieving the target temperature change rate over the at least one long time window; determining, by the controller, an additional power needed from the engine for powering the heater (108) based on a target energy of the aftertreatment component within each short time window; and transmitting, by the controller, a signal to the engine to request the additional power needed from the engine.

It should be appreciated that all combinations of the foregoing concepts and additional concepts discussed in greater detail below (provided such concepts are not mutually inconsistent) are contemplated as being part of the subject matter disclosed herein. In particular, all combinations of claimed subject matter appearing at the end of this disclosure are contemplated as being part of the subject matter disclosed herein.

BRIEF DESCRIPTION OF DRAWINGS

The foregoing and other features of the present disclosure will become more fully apparent from the following description and appended claims taken in conjunction with the accompanying drawings. Understanding that these drawings depict, by way of example only, several implementations in accordance with the disclosure and are therefore not to be considered limiting of its scope, the disclosure will be described with additional specificity and detail through use of the accompanying drawings.

FIG. 1 is a schematic illustration of an aftertreatment system, according to an embodiment.

FIG. 2 is a schematic block diagram of a controller that may be included in the aftertreatment system of FIG. 1, according to an embodiment.

FIG. 3A is a plot of an estimated warm-up time vs. temperature of an aftertreatment component of the aftertreatment system of FIG. 1 being subdivided into a plurality of long time windows; and FIG. 3B is a plot of energy of the aftertreatment component vs. the long time window corresponding to FIG. 3A, with the long time window being divided into a plurality of short time windows, and the energy of the aftertreatment component being monitored within each time window to adjust requested power and thereby energy from the engine based on actual energy of the aftertreatment component.

FIGS. 4, 5, 6A-6B, 7A-7B, 8A-8B, 9A-9B, 10A-10B, 11A-11B, and 12 are block diagrams of various modules and submodules that may be included in the controller of FIG. 2, according to example embodiments.

FIGS. 13A-13B is a schematic flow chart of a method for thermal management of an aftertreatment system, according to an embodiment.

FIG. 14 is a schematic flow chart of a method for thermal management of an aftertreatment system, according to another embodiment.

Reference is made to the accompanying drawings throughout the following detailed description. In the drawings, similar symbols typically identify similar components unless context dictates otherwise. The illustrative implementations described in the detailed description, drawings, and claims are not meant to be limiting. Other implementations may be utilized, and other changes may be made, without departing from the scope of the subject matter presented here. It will be readily understood that the aspects of the present disclosure, as generally described herein and illustrated in the figures, can be arranged, substituted, combined, and designed in a wide variety of different configurations, all of which are explicitly contemplated and made part of this disclosure.

DETAILED DESCRIPTION

Embodiments described herein relate generally to systems and methods for thermal management of aftertreatment systems. In particular, the systems and methods described herein perform real time thermal management of each component of the aftertreatment system that includes a heater, based on target temperature of all components of the aftertreatment system by determining additional energy needed to heat up each component to its target temperature, determining total additional power needed from the engine to obtain the additional energy needed, and scheduling additional power request from the engine for powering at least the heater so as to prevent a temperature of each aftertreatment component from overshooting its target temperature.

SCR systems need to operate at a sufficient temperature for efficient decomposition of the $NO_X$ gases to meet emission requirements. If the temperature of the SCR system is not sufficiently high, the SCR system may not be able to effectively convert $NO_X$ gases into its constituents, which leads to high $NO_X$ emissions from the exhaust system. Particularly, at engine startup, the temperature of the SCR system and other components of the aftertreatment system does not increase at a sufficient rate that can lead to higher $NO_X$ emissions. The aftertreatment system may also include other components such as filters or oxidation catalysts upstream of the aftertreatment system. Exhaust gas passes through these components before reaching the SCR system and therefore, the temperature of each of these components impacts the temperature of the SCR system.

Generally aftertreatment systems rely on the engine coupled thereto to provide most of the power and thereby, energy to raise and maintain the temperature of the SCR system, for example, to provide power to a heater, or to activate a hydrocarbon insertion assembly for inserting hydrocarbons into the oxidation catalyst, which combust and heat the exhaust gas and thereby, downstream aftertreatment components including the SCR system. The power available from the engine depends upon the current operating condition of the engine, for example, whether the engine is starting up, running idle, under rich or lean conditions, etc. The actual power being produced by the engine is unpredictable and fluctuates frequently, and may be higher or lower than needed. Additional power request from the engine without considering current energy demanded by each aftertreatment component and the actual power being produced by the engine, causes the engine to burn more fuel than may be needed resulting in additional $CO_2$ emissions than necessary. Moreover, such an additional power request can lead to the heater and/or the oxidation catalyst heating the SCR system to a higher temperature than a target temperature for the SCR system, which can lead to premature aging of the SCR system, which is undesirable.

In contrast, various embodiments of the systems and methods described herein for thermal management of aftertreatment systems may provide one or more benefits including, for example: (1) allowing faster heating of the SCR system to its target temperature, thereby reducing $NO_X$ emissions; (2) dynamically managing additional power requests from the engine based on dynamic monitoring of energy of each aftertreatment component such that only additional power that is needed from the engine within predetermined time intervals is requested; (3) optimizing fuel consumption, thereby improving fuel economy while reducing $CO_2$ emissions; (4) inhibiting a temperature of the SCR system from exceeding its target temperature, thereby reducing aging of the SCR system and increasing its life; (5) reduce temperature oscillations of the temperature of the SCR system, thereby improving $NO_X$ emission control; and (6) reducing false fault signals due to ammonia and $NO_X$ slip due to the temperature oscillations.

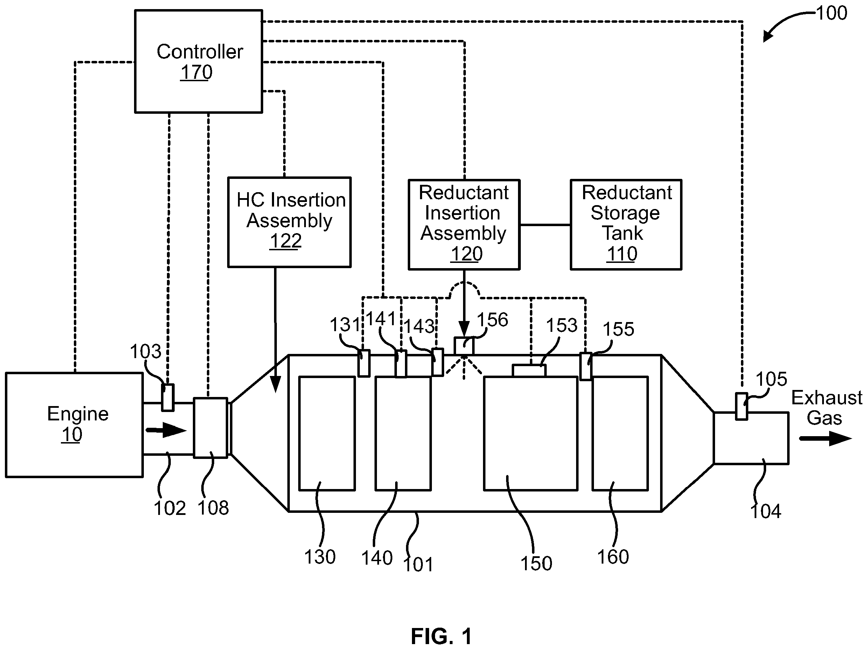

FIG. 1 is a schematic illustration of an aftertreatment system 100, according to an embodiment. The aftertreatment system 100 is configured to receive exhaust gas (e.g., diesel exhaust gas from an engine 10 and treat constituents (e.g., $NO_X$, CO, $CO_2$) of the exhaust gas. The aftertreatment system 100 includes a heater 108, a reductant storage tank 110, a reductant insertion assembly 120, an oxidation catalyst 130, a filter 140, a SCR system 150, and a controller 170, and may optionally, also include an ammonia oxidation ($AMO_X$) catalyst 160, and a hydrocarbon insertion assembly 122.

The engine 10 may include, for example, a diesel engine, a gasoline engine, a natural gas engine, a dual fuel engine, a biodiesel engine, an E-85 engine, or any other suitable engine). In some embodiments, the engine 10 includes a diesel engine. The engine 10 combusts fuel and generates an exhaust gas that includes $NO_X$, CO, $CO_2$, and other constituents. The engine 10 may include other components, for example, a transmission, fuel insertion assemblies, a generator or alternator to convert the mechanical power produced by the engine into electrical power (e.g., to power the heater 108, the reductant insertion assembly 120, the hydrocarbon insertion assembly 122, and the controller 170), etc.

The aftertreatment system 100 includes a housing 101 within which components of the aftertreatment system 100 are disposed. The housing 101 may be formed from a rigid, heat-resistant and corrosion-resistant material, for example stainless steel, iron, aluminum, metals, ceramics, or any other suitable material. The housing 101 may have any suitable cross-section, for example, circular, square, rectangular, oval, elliptical, polygonal, or any other suitable shape.

An inlet conduit 102 is fluidly coupled to an inlet of the housing 101 and structured to receive exhaust gas from the engine 10 and communicate the exhaust gas to an internal volume defined by the housing 101. Furthermore, an outlet conduit 104 may be coupled to an outlet of the housing 101 and structured to expel treated exhaust gas into the environment (e.g., treated to remove particulate matter such as soot by the filter 140 and/or reduce constituents of the exhaust gas such as $NO_X$ gases, CO, unburnt hydrocarbons, etc. included in the exhaust gas by the SCR system 150 and the oxidation catalyst 130).

A first sensor 103 may be positioned in the inlet conduit 102. The first sensor 103 may comprise a $NO_X$ sensor configured to measure an amount of $NO_X$ gases included in the exhaust gas flowing into the SCR system 150, and may include a physical sensor or a virtual sensor. In various embodiments, a temperature sensor, a pressure sensor, an oxygen sensor or any other sensor may also be positioned in the inlet conduit 102 so as to determine one or more operational parameters of the exhaust gas flowing through the aftertreatment system 100.

A second sensor 105 may be positioned in the outlet conduit 104. The second sensor 105 may comprise a second $NO_X$ sensor configured to determine an amount of $NO_X$ gases expelled into the environment after passing through the SCR system 150. In other embodiments, the second sensor 105 may comprise a particulate matter sensor configured to determine an amount of particulate matter (e.g., soot included in the exhaust gas exiting the filter 140) in the exhaust gas being expelled into the environment. In still other embodiments, the second sensor 105 may comprise an ammonia sensor configured to measure an amount of ammonia in the exhaust gas flowing out of the SCR system 150, i.e., determine the ammonia slip. This may be used as a measure of a catalytic conversion efficiency of the SCR system 150 for adjusting an amount of reductant to be inserted into the SCR system 150, and/or adjusting a temperature of the SCR system 150, as described herein, so as to allow the SCR system 150 to effectively use the ammonia for catalytic decomposition of the $NO_X$ gases included in the exhaust gas flowing therethrough. The $AMO_X$ catalyst 160 may be positioned downstream of the SCR system 150 so as to decompose any unreacted ammonia that flows past the SCR system 150.

The heater 108 is disposed upstream of the other aftertreatment components, for example, in the inlet conduit 102 proximate to an engine exhaust manifold. The heater 108 includes an electrical heater and can in some embodiments, may have a heater power in a range of 10kW to 100 kW (i.e., the electrical power consumed by the heater 108 to generate heat). The heater 108 can be selectively activated to heat the exhaust gas flowing therethrough towards the downstream aftertreatment components, and thereby heat the aftertreatment components.

The oxidation catalyst 130 is disposed downstream of the heater 108 and configured to decompose unburnt hydrocarbons and/or CO included in the exhaust gas. In some embodiments, the oxidation catalyst 130 may include a diesel oxidation catalyst. An oxidation catalyst outlet temperature sensor 131 may be disposed proximate to an outlet of the oxidation catalyst 130 and configured to measure an oxidation catalyst outlet temperature. The hydrocarbon insertion assembly 122 is configured to selectively insert hydrocarbons (e.g., the same fuel that is being consumed by the engine 10) into or upstream of the oxidation catalyst 130.

When a temperature of the oxidation catalyst 130 is equal to or above a light-off temperature of the oxidation catalyst 130, it catalyzes combustion of the inserted hydrocarbons so as to cause an increase in the temperature of the exhaust gas. The hydrocarbon insertion assembly 122 can be powered by the engine. In this manner, the heater 108 and/or the oxidation catalyst 130 can be used to provide energy (i.e., thermal energy) for heating the downstream aftertreatment components. In some embodiments, the hydrocarbon insertion assembly 122 may be selectively activated (e.g., by the controller 170) to insert hydrocarbons into the oxidation catalyst 130 for heating the exhaust gas and thereby, the downstream filter 140 and SCR system 150. In some embodiments, insertion of the hydrocarbons may be configured to heat the exhaust gas to a sufficient temperature to regenerate the filter 140 by burning off particulate matter that may have accumulated on the filter 140, and/or regenerate the SCR system 150 by evaporating reductant deposits deposited on the SCR system 150.

The filter 140 is disposed downstream of the oxidation catalyst 130 and upstream of the SCR system 150 and configured to remove particulate matter (e.g., soot, debris, inorganic particles, etc.) from the exhaust gas. In various embodiments, the filter 140 may include a ceramic filter. In some embodiments, the filter 140 may include a cordierite filter which can, for example, be an asymmetric filter. In yet other embodiments, the filter 140 may be catalyzed. A filter bed temperature sensor 141 may be disposed on the filter 140 and configured to measure a filter bed temperature sensor of the filter 140. Moreover, a filter outlet temperature sensor 143 is disposed proximate to an outlet of the filter 140 and configured to measure a filter outlet temperature.

The SCR system 150 is formulated to decompose constituents of an exhaust gas flowing therethrough in the presence of a reductant, as described herein. In some embodiments, the SCR system 150 may include a selective catalytic reduction filter (SCRF). The SCR system 150 includes a SCR catalyst formulated to catalyze decomposition of the NOx gases into its constituents in the presence of a reductant. Any suitable SCR catalyst may be used such as, for example, platinum, palladium, rhodium, cerium, iron, manganese, copper, vanadium based catalyst, any other suitable catalyst, or a combination thereof. The SCR catalyst may be disposed on a suitable substrate such as, for example, a ceramic (e.g., cordierite) or metallic (e.g., kanthal) monolith core which can, for example, define a honeycomb structure. A washcoat can also be used as a carrier material for the SCR catalyst. Such washcoat materials may comprise, for example, aluminum oxide, titanium dioxide, silicon dioxide, any other suitable washcoat material, or a combination thereof. A SCR bed temperature sensor 153 is disposed on the SCR system 150 and configured to measure a SCR bed temperature of the SCR system 150. Moreover, a SCR outlet temperature sensor 155 may be disposed proximate to an outlet of the SCR system 150 and configured to measure a SCR outlet temperature.

Although FIG. 1 shows only the oxidation catalyst 130, the filter 140, the SCR system 150, and the AMOx catalyst 160 disposed within the internal volume defined by the housing 101, in other embodiments, a plurality of aftertreatment components may be disposed within the internal volume defined by the housing 101 in addition to the oxidation catalyst 130, the filter 140, the SCR system 150 and the $AMO_X$ catalyst 160. Such aftertreatment components may include, for example, mixers, baffle plates, secondary filters (e.g., a secondary partial flow or catalyzed filter) or any other suitable aftertreatment component.

A reductant port 156 may be positioned on a sidewall of the housing 101 and structured to allow insertion of a reductant therethrough into the internal volume defined by the housing 101. The reductant port 156 may be positioned upstream of the SCR system 150 (e.g., to allow reductant to be inserted into the exhaust gas upstream of the SCR system 150) or over the SCR system 150 (e.g., to allow reductant to be inserted directly on the SCR system 150). Mixers, baffles, vanes or other structures may be positioned in the housing 101 upstream of the SCR system 150 (e.g., between the filter 140 and the SCR system 150) so as to facilitate mixing of the reductant with the exhaust gas.

The reductant storage tank 110 is structured to store a reductant. The reductant is formulated to facilitate decomposition of the constituents of the exhaust gas (e.g., $NO_X$ gases included in the exhaust gas). Any suitable reductant may be used. In some embodiments, the exhaust gas comprises a diesel exhaust gas and the reductant comprises a diesel exhaust fluid (DEF). For example, the DEF may comprise urea, an aqueous solution of urea, or any other fluid that comprises ammonia, by-products, or any other diesel exhaust fluid as is known in the arts (e.g., the DEF marketed under the name ADBLUE®). For example, the reductant may comprise an aqueous urea solution having a particular ratio of urea to water. In some embodiments, the reductant can comprise an aqueous urea solution including 32.5% by weight of urea and 67.5% by weight of deionized water, including 40% by weight of urea and 60% by weight of deionized water, or any other suitable ratio of urea to deionized water.

A reductant insertion assembly 120 is fluidly coupled to the reductant storage tank 110. The reductant insertion assembly 120 is configured to selectively insert the reductant into the SCR system 150 or upstream thereof (e.g., into the inlet conduit 102) or a mixer (not shown) positioned upstream of the SCR system 150. The reductant insertion assembly 120 may comprise various structures to facilitate receipt of the reductant from the reductant storage tank 110 and delivery to the SCR system 150, for example, pumps, valves, screens, filters, etc.

The aftertreatment system 100 may also include a reductant injector fluidly coupled to the reductant insertion assembly 120 and configured to insert the reductant (e.g., a combined flow of reductant and compressed air) into the SCR system 150. In various embodiments, the reductant injector may include a nozzle having predetermined diameter. In various embodiments, the reductant injector may be positioned in the reductant port 156 and structured to deliver a stream or a jet of the reductant into the internal volume of the housing 101 so as to deliver the reductant to the SCR system 150.

The controller 170 is operatively coupled to the reductant insertion assembly 120, the first sensor 103, the second sensor 105, the temperature sensors 131, 141, 143, 153, 155, the hydrocarbon insertion assembly 122 and/or the heater 108, and in some embodiments, the reductant insertion assembly 120. For example, the controller 170 may be communicatively coupled to the first sensor 103 and may be configured to receive a first sensor signal from the first sensor 103, for example, to determine an engine out $NO_X$ ($EONO_X$) amount of $NO_X$ gases included in the exhaust gas emitted by the engine and entering the aftertreatment system 100. The controller 170 may also be communicatively coupled to the second sensor 105 and may be configured to determine a concentration of $NO_X$ gases or ammonia included in the exhaust gas being expelled into the environment. In addition, the controller 170 may be configured to receive temperature signals from the temperature sensors 131, 141, 143, 153, 155 and determine the oxidation catalyst outlet temperature, the filter bed temperature, the filter outlet temperature, the SCR bed temperature, and the SCR outlet temperature, based on the respective temperature signals.

The controller 170 may be configured to determine the SCR catalytic conversion efficiency of the SCR system 150 based on the $EONO_X$ amount entering the aftertreatment system 100, and the outlet $NO_X$ amount of $NO_X$ gases exiting the aftertreatment system 100. For example, the controller 170 may determine a difference between the $EONO_X$ amount and the outlet $NO_X$ amount and determine the SCR catalytic conversion efficiency based on the difference.

In some embodiments, the controller 170 is configured to determine an amount of reductant deposits deposited on the SCR system 150. For example, the controller 170 may be configured to determine the amount of reductant deposits based on the SCR catalytic conversion efficiency, and an amount of reductant inserted into the aftertreatment system 100 and/or an amount of ammonia slip. The controller 170 may include equations, algorithms or lookup tables to determine the amount of reductant deposits based on the one or more parameters described herein.

The controller 170 may also be configured to determine an amount of ammonia slip, i.e., an amount of ammonia gas in the exhaust gas downstream of the SCR system 150 based on the second sensor signal (e.g., an outlet $NO_X$ signal) received from the second sensor 105. For example, the controller 170 may be configured to correlate the outlet $NO_X$ amount measured by the outlet $NO_X$ sensor, and determine the amount of ammonia slip therefrom. The controller 170 may be configured to command the reductant insertion assembly 120 to adjust an amount of the reductant inserted into the aftertreatment system 100 based on the inlet $NO_X$ amount, the SCR catalytic conversion efficiency, an exhaust gas temperature at an inlet of the SCR system 150, an exhaust gas flow rate, and/or any other exhaust gas parameter.

The controller 170 may be operably coupled to the engine 10, the first sensor 103, the second sensor 105, the temperature sensors 131, 141, 143, 153, 155, the reductant insertion assembly 120, the hydrocarbon insertion assembly 122, the heater 108, and various components of the aftertreatment system 100 using any type and any number of wired or wireless connections. For example, a wired connection may include a serial cable, a fiber optic cable, a CAT5 cable, or any other form of wired connection. Wireless connections may include the Internet, Wi-Fi, cellular, radio, Bluetooth, ZigBee, etc. In one embodiment, a controller area network (CAN) bus provides the exchange of signals, information, and/or data. The CAN bus includes any number of wired and wireless connections.

The controller 170 is configured to perform dynamic thermal management of the aftertreatment system by dynamically setting a target temperature of all the aftertreatment components (i.e., the oxidation catalyst 130, the filter 140, and the SCR system 150). Based on the gap between the current aftertreatment component temperature and its target temperature, the controller 170 calculates total additional energy needed for thermal management of the SCR system 150 and other aftertreatment components, and evenly schedules the power request from the engine 10, and the heater 108 and/or oxidation catalyst 130 (i.e., cause insertion of hydrocarbons into the oxidation catalyst 130), to prevent temperature overshoot as well as undershoot of the SCR system 150.

For example, the controller 170 may be configured to determine energy needed to warm-up the aftertreatment component to a target temperature within an estimated warm-up time. The controller 170 is configured to determine a heater power needed from the heater 108 for warming up the aftertreatment component to the target temperature within the estimated warm-up time, for example, based on the determined energy. The controller 170 is configured activate the heater 108 (e.g., requests thermal management resulting in activation of the heater 108), and to determine an additional power needed from the engine 10 for powering the heater 108 based on a current power being generated by the engine 10, the determined heater power, the target temperature, and the estimated warm-up time. The controller 170 then transmits a signal to the engine 10 to request the additional power needed from the engine 10. In some embodiments, the controller 170 is configured to adjust the additional power requested from the engine 10 based on a power limit of the heater 108, a current temperature of the aftertreatment component, the target temperature, and the estimated warm-up time.

For example, the controller 170 may be configured to perform thermal management of the SCR system 150 based on a target SCR bed temperature, an SCR inlet target temperature that is equal to a filter outlet target temperature after accounting for any thermal losses, and an estimated warm-up time for the SCR system 150 to reach the target SCR bed temperature. For the aftertreatment system 100 to raise the SCR bed temperature to the target SCR bed temperature, the engine 10 needs to generate power corresponding to energy needed to raise the temperature of all aftertreatment components so as to minimize $NO_X$ and $CO_2$ emissions. The estimated SCR warm-up time may be determined based on the current SCR bed temperature and target SCR bed temperature using any suitable algorithms, equations, or a lookup table.

In some embodiments, the controller 170 may be configured to determine a catalytic conversion efficiency of the SCR system 150 and the $EONO_X$ amount, and determine the target SCR bed temperature based on the catalytic conversion efficiency of the SCR system 150 and the $EONO_X$. For example, the target SCR bed temperature may correspond to a minimum SCR bed temperature for efficient conversion (e.g., at a conversion efficiency of greater than 95%) of the $EONO_X$ into its constituents for meeting $NO_X$ emission requirements. Generally, this temperature is around 250 degrees Celsius ("C"). However, this minimum SCR bed temperature may be lower or higher based on the catalytic conversion efficiency of the SCR system and the $EONO_X$ amount, for example, higher than 250 degrees C for low catalytic conversion efficiency and high $EONO_X$, and lower for high catalytic conversion efficiency and low $EONO_X$. In some embodiments, the controller 170 may be configured to initially set a base temperature (e.g., 250 degrees C) as the target SCR bed temperature, and then based on the catalytic conversion efficiency and the $EONO_X$ amount, add or subtract an offset value from the base temperature to determine the target SCR bed temperature, according to table 1 shown below:

Table 1: Temperature offset values for determining target SCR bed temperature.

| Target SCR Bed Temperature | High $EONO_X$ | Low $EONO_X$ |
|---|---|---|
| High Catalytic CE | 0 | -20 |
| Low Catalytic CE | +20 | +20 |

As described before, the estimated SCR warm-up time is the time needed for warming the SCR system 150 to the target SCR bed temperature, which is based on the current SCR bed temperature when the controller 170 initiates thermal management (i.e., when the current SCR bed temperature is below the target SCR bed temperature). The controller 170 may start a timer simultaneously with initiating the thermal management. In response to the timer reaching the estimated SCR warm-up time and the current SCR bed temperature still being below the target SCR bed temperature, the controller 170 is configured to determine a new estimated SCR warm-up time based on the current SCR bed temperature and the target SCR bed temperature (e.g., from algorithms, equations, or a lookup table). The controller 170 then resets and restart the timer, and adjusts the additional power requested from the engine 10, for example, for powering the heater 108 and/or inserting hydrocarbons into the oxidation catalyst 130 based on the new estimated SCR warm-up time, the current SCR bed temperature, and the target SCR bed temperature.

For example, the controller 170 may determine the estimated SCR warm-up time based on a current SCR bed temperature of the SCR system 150 and the target SCR bed temperature, and determine an estimated filter warm-up time for the filter 140 based on a target filter outlet temperature and a current filter outlet temperature of the filter 140. The controller 170 may be adjust the additional power requested from the engine 10 based on each of the estimated SCR warm-up time and the target SCR bed temperature, and the estimated filter warm-up time and the target filter outlet temperature.

The controller 170 may be configured to determine the filter outlet temperature is based on the target SCR bed temperature by adding an offset to compensate for temperature difference due to temperature losses between the filter outlet temperature and the current SCR bed temperature. These losses arise due to ambient temperature losses and/or due to reductant being inserted into the exhaust gas between the filter 140 and the SCR system 150. When the aftertreatment system 100 is warming up, the offset is a sum of temperature losses due to ambient temperature and reductant insertion. Therefore, in response to the current SCR bed temperature being less than the target SCR bed temperature, the controller 170 may be configured to determine the target filter outlet temperature based on the target SCR bed temperature and a filter temperature offset value, the filter temperature offset value being based on: (1) an ambient temperature, and (2) temperature loss due to insertion of a reductant into the exhaust gas. In such instances, the controller 170 may be configured to determine each of the reductant temperature offset using the following equations:

$$T_{DEF\_Offset} = \frac{M_{DEF} \cdot C_{p\_DEF\_Latent} + M_{DEF} \cdot C_{p\_DEF} \cdot (100 - T_{DEF})}{M_{Exh} \cdot C_{p\_exh}} \quad (1)$$

where: $T_{DEF\_Offset}$ is the reductant temperature offset due to reductant insertion losses, $M_{DEF}$ is the mass of the inserted reductant, $C_{p\_DEF\_Latent}$ is the latent heat capacity of the reductant, $C_{p\_DEF}$ is the specific heat capacity of the reductant, $M_{Exh}$ is the mass of the exhaust gas, $C_{p\_exh}$ is the specific heat capacity of the exhaust gas, and $T_{DEF}$ is the temperature of the reductant.

The controller 170 may also be configured to determine the ambient offset temperature corresponding to the temperature losses using the following equation:

$$T_{DPF\_Amb\_Offset} = \left(T_{DPF\_Bed} - T_{Amb}\right) \cdot Factor \quad (2a)$$

where: $T_{DPF\_Amb\_Offset}$ is the ambient temperature offset for the filter 140, $T_{DPF\_Bed}$ is the current filter bed temperature, $T_{Amb}$ is the ambient temperature, and factor is a predetermined weightage factor. The controller 170 may also be configured to determine an SCR ambient offset temperature due to ambient losses from the SCR system 150 using the following equation:

$$T_{SCR\_Amb\_Offset} = \left(T_{SCR\_Bed} - T_{Amb}\right) \cdot Factor \quad (2b)$$

where: $T_{SCR\_Amb\_Offset}$ is the ambient temperature offset for the SCR system 150, $T_{SCR\_Bed}$ is the current SCR bed temperature, and factor is the weightage factor. The SCR ambient offset temperature may be added to the target SCR bed temperature to account for ambient temperature losses.

In some embodiments, in response to the SCR bed temperature being equal to or greater than the target SCR bed temperature, the controller 170 may be configured to, determine the target filter outlet temperature based on the target SCR bed temperature and a filter temperature offset value. However, in this instance, the controller 170 may be configured to determine the filter temperature offset value based on an average positive difference between the current filter outlet temperature and the current SCR bed temperature over a time period using the following equation:

$$T_{DPF\_Out\_Offset} = \frac{\sum_{i=1}^{n}\left(T_{DPF\_Out} - T_{SCR\_Bed}\right)}{n} \quad (3)$$

where: $T_{DPF\_Out\_Offset}$ is the filter temperature offset value, $T_{DPF\_Out}$ is the current filter outlet temperature, $T_{SCR\_Bed}$ is the current SCR bed temperature, and n is the time period.

The controller 170 may also be configured to perform thermal management of the filter 140. For managing the temperature of the filter 140, the controller 170 determines a target oxidation catalyst outlet temperature as the proxy for a target filter outlet temperature, and an estimated filter warm-up time for the filter 140 to reach the target filter outlet temperature. For example, the controller 170 may be configured to determine an estimated filter warm-up time for the filter 140 to reach the target filter outlet temperature based on a target oxidation catalyst outlet temperature and a current oxidation catalyst outlet temperature, and adjust the additional power requested from the engine 10 based also on the estimated filter warm-up time and the target filter outlet temperature.

In some embodiments, in response to the current filter outlet temperature being less than the target filter outlet temperature, the controller 170 may be configured determined to the target oxidation catalyst outlet temperature based on the target filter outlet temperature and an oxidation catalyst temperature offset value. Thus, when the filter 140 is still warming up to its target temperature, the oxidation catalyst temperature offset value is based on the ambient temperature and a current filter bed temperature of the filter 140. In particular embodiments, when the filter 140 is warming up, the oxidation catalyst temperature offset value may be determined using the following equation:

$$T_{DOC\_Out\_Offset} = \left(T_{DPF\_Bed} - T_{Amb}\right) \cdot Factor \quad (4)$$

where: $T_{DOC\_Out\_Offset}$ is the oxidation catalyst temperature offset value, $T_{DPF\_Bed}$ is the current filter bed temperature, $T_{Amb}$ is the ambient temperature, and factor is a predetermined weightage factor.

On the other hand, in response to the current filter outlet temperature being equal to or greater than the target filter outlet temperature, the controller 170 may be configured to determine the oxidation catalyst temperature offset value based an average positive difference between the current oxidation catalyst outlet temperature and the current filter outlet temperature over a time period. For example, in such instances, the oxidation catalyst temperature offset value may be determined using the following equation:

$$T_{DOC\_Out\_Offset} = \frac{\sum_{i=1}^{n}\left(T_{DOC\_Out} - T_{DPF\_Out}\right)}{n} \quad (5)$$

Where: $T_{DOC\_Out\_Offset}$ is the filter inlet temperature offset value, $T_{DOC\_Out}$ is the current oxidation catalyst outlet temperature, $T_{DPF\_Out}$ is the current filter outlet temperature, and n is the time period .

In some embodiments, the controller 170 may be configured to determine the estimated filter warm-up time using algorithms or equations as (e.g., as previously described), or a lookup table which is based on the current filter outlet temperature when filter thermal management is requested by the controller 170. Filter thermal management is requested when the current filter outlet temperature is below the target. Once the filter thermal management is requested, a timer will start counting. When the timer reaches the estimated filter warm-up time, the timer will resets and if the filter outlet temperature is still below the target a new estimated filter warm-up time for the filter 140 to reach the target filter outlet temperature is determined (e.g., from the lookup table) based on the current filter outlet temperature. The controller 170 then resets and restart the timer, and adjusts the additional power requested from the engine 10, for example, for powering the heater 108 and/or inserting hydrocarbons into the oxidation catalyst 130 based on the new estimated filter warm-up time, the current filter outlet temperature, and the target filter outlet temperature. The filter thermal management request may be reset when the filter outlet temperature is equal to or above the target filter outlet temperature.

The controller 170 may also be configured to perform thermal management of the oxidation catalyst 130, for example, to determine the estimated oxidation catalyst warm-up time of the oxidation catalyst to reach the target oxidation catalyst outlet temperature, and adjust the additional power requested from the engine 10 based also on the estimated oxidation catalyst warm-up time and the target oxidation catalyst outlet temperature. The estimated warm-up time for the oxidation catalyst 130 to reach its target oxidation catalyst outlet temperature may be determined by equations, algorithms, or a lookup table, which may be based on the oxidation catalyst outlet temperature when the oxidation catalyst thermal management is requested from engine 10 by the controller 170. The thermal management is requested when the oxidation catalyst outlet temperature is below the target oxidation catalyst outlet temperature. Once the oxidation catalyst thermal management is requested, the controller 170 starts a timer.

When the timer reaches the estimated oxidation catalyst warm-up time, the controller 170 resets the timer, and if the oxidation catalyst outlet temperature is still below the oxidation catalyst outlet temperature when the timer reaches the estimated oxidation catalyst warm-up time, the controller 170 is configured to reset the counter, and if the oxidation catalyst outlet temperature is still below the target oxidation catalyst outlet temperature, the controller 170 determines a new estimated oxidation catalyst warm-up time based on the current oxidation catalyst outlet temperature and the target oxidation catalyst outlet temperature. The new estimated oxidation catalyst outlet temperature may be determined, for example, from the lookup table based on the current oxidation catalyst outlet temperature. The controller 170 may be configured to reset when the oxidation catalyst outlet temperature is above the target oxidation catalyst outlet temperature threshold. In some embodiments, the target oxidation catalyst outlet temperature for thermal management of the oxidation catalyst 130 may correspond to the light-off temperature of the oxidation catalyst 130, at which the oxidation catalyst can catalyze combustion of hydrocarbons inserted into the oxidation catalyst 130.

Thus, the controller 170 is configured to perform thermal management of each of the oxidation catalyst 130, the filter 140, and the SCR system 150 based on a target temperature and the estimated warm-up times for each of these components to reach its target temperature. The controller 170 may then be configured to determine additional exhaust energy, and thereby, additional engine power for each of these components to warm up to its target temperature within its estimated warm-up time, and maintain the temperature around its target temperature. Particularly, the controller 170 is configured to determine a SCR warm-up energy, a filter warm-up energy, and an oxidation catalyst warm-up energy for the SCR system 150, the filter 140, and the oxidation catalyst 130, respectively to reach their target temperatures. The controller 170 is then configured to determine additional power needed from engine 10 based on the determined SCR warm-up energy, the filter warm-up energy, and the oxidation catalyst warm-up energy.

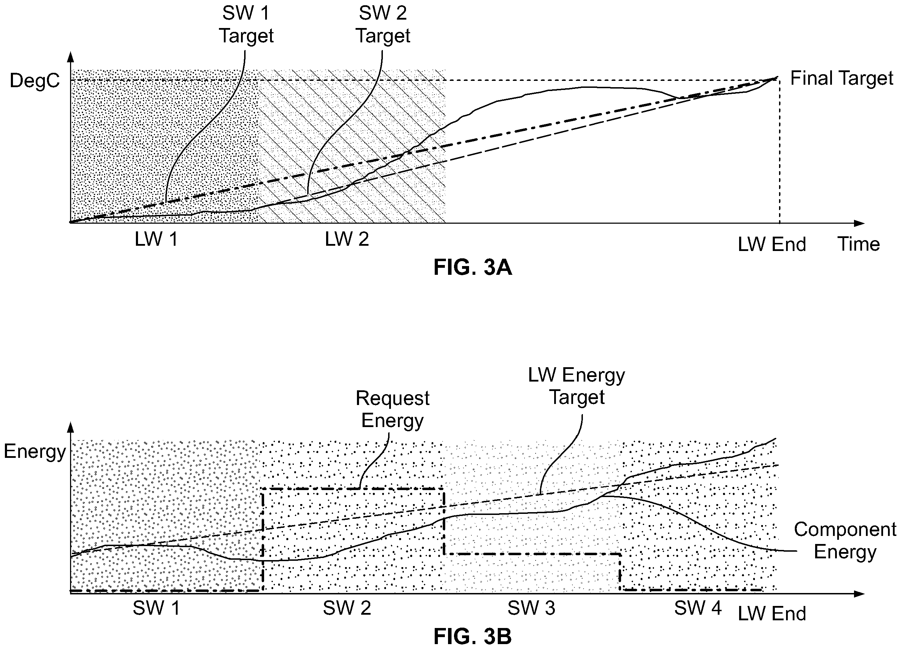

Due to the uncertainty of the exhaust power available from the engine 10, temperature overshoot can happen if additional power is requested too aggressively from the engine 10, particularly at the beginning of thermal management when a difference between the current temperature and the target temperature of each of the aftertreatment components, particularly, the SCR system 150, is substantial. To prevent temperature overshoot and provide dynamic thermal management, the controller 170 is configured to divide the estimated warm-up time for each of the aftertreatment components into a plurality of long time windows ("LW"), as shown in FIG. 3A. The controller 170 determines a target temperature change rate within each long time window based on an initial temperature of the aftertreatment component at a start of the long time window, the target temperature, and the estimated warm-up time. In this way, the controller 170 divides the total energy needed for warming up each aftertreatment component into a plurality of small energy portions, and requests the small energy portion within each long time window whose duration is much shorter than the estimated warm-up time for each aftertreatment component. In some embodiments, a length of each of the long time window may be in a range of 1 minute to 4 minutes, inclusive.

To prevent temperature oscillations between two subsequent long time windows, the controller 170 may be configured to divide each long time window into a plurality of short time windows ("SW") as shown in FIG. 3B, and determine a target energy change rate within each short time window for achieving the target temperature change rate over the long time window. Because the energy requested in one short time window may be higher or lower than the requested energy from the engine 10, the controller 170 is configured to reduce or increase the requested energy in a subsequent or next short time window. The controller 170 adjusts the additional power requested from the engine based on a target energy of the aftertreatment component within each short time window. In some embodiments, a length of each short time window may be in a range of 5 seconds to 20 seconds, inclusive.

For example, if a current temperature and thereby, a current energy of one or more of the aftertreatment components is less than a target temperature, and thereby target energy for that component, the controller 170 may request a first amount of additional power from the engine 10 (e.g., amount of power provided to the heater 108 and/or insert hydrocarbons into the oxidation catalyst 130) within a first short time window. If at the end of the first short time window, the current energy of the aftertreatment component is less than the target energy for that aftertreatment component within the first short time window (e.g., temperature and thereby energy overshoot), this implies that the first amount of additional power requested was not sufficient to heat the aftertreatment component to its target energy within the first short time window and ultimately, the estimated warm-up time period.

The controller 170 is configured to request a second amount of additional power from the engine 10 in a subsequent second time window, which is higher than the first amount of additional power, so as to cause a faster increase in the current energy of the aftertreatment component towards the target energy. However, if at the end of the second short time window, the increase in the current energy of the aftertreatment component is faster than the estimated target energy at the end of the second short time window and/or the current energy overshoots the target energy, the controller 170 may request a smaller amount of additional energy or does not request any additional from the engine 10 in a subsequent third short time window.

Expanding further, the controller 170 may be configured to determine the target temperature change rate within each long time window by evenly scheduling the energy request corresponding to the additional power request over the estimated warm-up time over each long time window using the following equation:

$$dT_{target} = \frac{T_{Target} - T_{Int}}{TM\ Remain\ Time} \quad (6)$$

where: $dT_{target}$ is the target temperature change rate within each long time window, *TM Remain Time* is a difference between the estimated warm-up time and a time elapsed since thermal management started, $T_{Target}$ is the target temperature for the aftertreatment component, $T_{Int}$ is a current or initial temperature of the aftertreatment component at the start of a long time window.

The controller 170 is then configured to determine an evenly distributed energy request over the plurality of long time windows using the following equations:

$$P_{LW\_Target} = dT_{target} \cdot M_{xxx} \cdot C_{p\_xxx} \quad (7)$$

$$Q_{LW\_Target} = P_{LW\_Target} \cdot Time_{LW} \quad (8)$$

where: $P_{LW\_Target}$ is a target power request within each long time window, $Q_{LW\_Target}$ is a target energy request within each long time window, $Time_{LW}$ is the length of each long time window, $M_{xxx}$ is the mass of aftertreatment component (e.g., the oxidation catalyst 130, the filter 140, or the SCR system 150), and $C_{p\_xxx}$ is the specific heat of the aftertreatment component.

The controller 170 may also be configured to determine the power request from the engine 10 within each short time window corresponding to the energy needed to warm up each aftertreatment component to its target energy within the short time window. For example, the controller 170 may be configured to monitor the temperature of each aftertreatment component (e.g., based on signals received from the temperature sensors 131, 141, 143, 151, 153), and compare it against the target temperature for the aftertreatment component within that short time window to raise the aftertreatment component to the target energy of the next short time window. The energy balance equation for each component is:

$$Q_{in} = \Delta Q_{mass} + Q_{loss} - Q_{out} \quad (9)$$

where: $Q_{in}$ is the inlet exhaust flow energy of the exhaust gas flowing into the aftertreatment component, $Q_{out}$ is the outlet exhaust flow energy, $\Delta Q_{mass}$ is the mass energy change of the aftertreatment component, and $Q_{loss}$ is the energy lost to ambient.

The controller 170 may be configured to determine the energy balance for the aftertreatment system 100 using the following equation:

$$Q_{DOC\_in} = \Delta Q_{DOC\_mass} + Q_{DOC\_Amb\_Loss} + \Delta Q_{DPF\_mass} + Q_{DPF\_Amb\_Loss} + \Delta Q_{SCR\_mass} +$$

$$Q_{DEF\_Loss} + Q_{SCR\_Amb\_Loss} + Q_{SCR\_out} \quad (10)$$

where: $Q_{DOC\_in}$ is the exhaust energy at the inlet of the oxidation catalyst 130, $\Delta Q_{DOC\_mass}$ is the change in mass of the oxidation catalyst 130, $Q_{DOC\_Amb\_Loss}$ is the energy lost from the oxidation catalyst 130 to the ambient environment, $\Delta Q_{DPF\_mass}$ is the change in mass of the filter 140, $Q_{DPF\_Amb\_Loss}$ is the energy lost from the filter 140 to the ambient environment, $\Delta Q_{SCR\_mass}$+ is the change in mass of the SCR system 150, $Q_{DEF\_Loss}$ is the exhaust gas energy loss due to insertion of the reductant therein, $Q_{SCR\_Amb\_Loss}$ is the energy lost from the SCR system 150 to the ambient environment, and $Q_{SCR\_out}$ is the exhaust gas energy at the outlet of the SCR system 150.

Assuming that an outlet temperature at the outlet of each of the oxidation catalyst 130 and the filter 140 is $T_{mass}$, then:

$$T_{SCR\_Mass} = (T_{DPF\_out} + T_{SCR\_out}) \cdot 0.5 \quad (11)$$

$$\frac{Q_{Loss}}{T_{mass}} = k \quad (12)$$

Where $T_{SCR\_Mass}$ is a temperature over the entire SCR system 150 mass, $T_{DPF\_out}$ is a filter outlet temperature, $T_{SCR\_out}$ is the SCR outlet temperature, and $Q_{LOSS}$ is the energy loss of the exhaust gas through the aftertreatment system 100.

The additional inlet flow energy requested from the engine 10 by the controller 170 should be sufficient to raise the temperature of the aftertreatment component to its target temperature while accounting for ambient energy losses and the additional SCR outlet flow energy. The controller 170 may be configured to determine these using the following equations:

$$\Delta Q_{mass} = \left[ (T_{Curr\_Target} - T_{Curr}) \cdot Gain + \Delta T_{SW\_Target} \right] \cdot M \cdot C_P \quad (13);$$

and

$$Q_{Loss} = Q_{in} - \Delta Q_{mass} - Q_{out} \quad (14);$$

or

$$\Delta Q_{Loss} = \frac{T_{nextSW\_End\_Target} - T_{curr}}{T_{curr}} \cdot Q_{preSW\_Loss} \quad (15);$$

where: $\Delta Q_{mass}$ is the additional energy for raising the mass temperature of the aftertreatment component to its target temperature, $T_{Curr\_Target}$ is the target temperature, $T_{Curr}$ is the current temperature of the aftertreatment component, $\Delta T_{SW\_Target}$ is the change in target temperature over the short time window, $M$ is the mass of the aftertreatment component, $C_P$ is the specific heat capacity of the aftertreatment component, $\Delta Q_{Loss}$ is the additional energy lost to ambient,

$T_{nextSW\_End\_Target}$ is the target temperature for the aftertreatment component at the end of the next short time window, and $Q_{preSW\_Loss}$ is the loss in energy of the aftertreatment component before start of the short time window.

Assuming that the exhaust flow remains the same for a subsequent short time window and the exhaust gas temperature increases linearly to a target temperature at the end of the next short time window, the estimated SCR outlet flow energy for the next short time window can be simplified as follows:

$$nextQ_{SCR\_out} = \frac{T_{Target}+dT_{target}\cdot Time_{SW}+T_{Current}}{2} \cdot Flow\_Rate \cdot C_{p\_exh} \cdot Time_{SW} \quad (16);$$

$$preQ_{SCR\_out} = \int_{t=0}^{t=Time_{SW}} T_{SCR\_out} \cdot Flow\_Rate \cdot C_{p\_exh}dt \quad (17);$$

and

$$\Delta Q_{SCR\_out} = nextQ_{SCR\_out} - preQ_{SCR\_out} \quad (18),$$

Where: $nextQ_{SCR\_out}$ is the SCR outlet flow energy for the subsequent short time window, $T_{Target}$ is the target SCR bed temperature, $dT_{target}$ is the target temperature change rate over the short time window, $preQ_{SCR\_out}$ is the last short time window SCR outlet flow energy, $Flow\_Rate$ is the exhaust gas mas flow rate in grams/second, $C_{p\_exh}$ is the exhaust flow specific heat capacity, $Time_{SW}$ is the length of the short time window, $T_{SCR\_out}$ is the current SCR outlet temperature, and $\Delta Q_{SCR\_out}$ is the change in the SCR energy over the short time window.

For each aftertreatment component, the controller 170 may be configured to determine additional power ($\Delta P_{xxx}$) request from engine 10 using the following equations:

$$\Delta P_{DOC} = \frac{\Delta Q_{DOC\_mass}+\Delta Q_{DOC\_Loss}}{Time_{SW}} \quad (19);$$

$$\Delta P_{DPF} = \frac{\Delta Q_{DPF\_mass}+\Delta Q_{DPF\_Loss}}{Time_{SW}} \quad (20);$$

and

$$\Delta P_{SCR} = \frac{\Delta Q_{SCR\_mass}+\Delta Q_{SCR\_Loss}+\Delta Q_{SCR\_out}}{Time_{SW}} \quad (21)$$

where: $\Delta P_{DOC}$ is the additional power needed for the oxidation catalyst 130 during the short time window, $\Delta P_{DPF}$ is the additional power needed for the filter 140 to during the short time window, $\Delta P_{SCR}$ is the additional power needed for the SCR system 150 to during the short time window, $\Delta Q_{xxx\_mass}$ is the change in energy of the particular aftertreatment component during the short time window, $\Delta Q_{xxx\_mass}$ is the energy loss for the particular aftertreatment component during the short time window, and $Time_{SW}$ is the time duration or length of the short time window.

Thus, the controller 170 serves as a power arbitrator and is configured to calculate the energy and power needed for the overall aftertreatment system 100 and request power from the engine 10, the heater 108, and the oxidation catalyst 130. As previously described, the controller 170 is configured to determine a SCR warm-up energy, a filter warm-up energy, and an oxidation catalyst warm-up energy for the SCR system 150, the filter 140, and the oxidation catalyst 130, respectively to reach their target temperatures, and determines additional power needed from engine 10 based on the determined SCR warm-up energy, the filter warm-up energy, and the oxidation catalyst warm-up energy. For example, the controller 170 may be configured to determine an average warm-up power based on a sum of the determined SCR warm-up energy, the filter warm-up energy, and the oxidation catalyst warm-up energy over the estimated warm-up time for warming each component to its target temperature. The controller 170 is configured to determine a sum power needed from engine 10 by adding a power needed by each of the oxidation catalyst 130, the filter 140, and the SCR system 150 from the engine 10 based on the determined SCR warm-up energy, the filter warm-up energy, and the oxidation catalyst warm-up energy.

During warm up (e.g., at engine 10 startup), the engine 10 generally operates in high load condition for short period of time. This may cause the aftertreatment system 100 to warm up faster than expected. In this case, the sum power requested may be zero or lower than average engine power needed for warm up, but a current temperature of the SCR system 150 may still be below its target temperature.

In such instances, in response to the determined sum power being zero or lower than the determined average warm-up power and a current SCR bed temperature of the SCR system 150 being less than a target SCR bed temperature, the controller 170 may be configured to request the sum power as the additional power from the engine 10; and at least one of: (1) request power from the heater 108 based on the average warm-up power; and (2) cause insertion of hydrocarbons into the oxidation catalyst 130 to obtain power from the oxidation catalyst 130 based on the average warm-up power.

For example, the controller 170 may be configured to determine the average warm-up power at the start of thermal management as follows:

$$avg\Delta P_{warmup} = \frac{\Delta Q_{DOC\_warmup} + \Delta Q_{DPF\_warmup} + \Delta Q_{SCR\_warmup}}{Time_{warmup}} \quad (22);$$

$$\Delta Q_{DOC\_warmup} = (T_{DOC\_Final\_Target} - T_{DOC\_int}) \cdot M_{DOC} \cdot C_{p\_DOC} \quad (23);$$

$$\Delta Q_{DPF\_warmup} = (T_{DPF\_Final\_Target} - T_{DPF\_int}) \cdot M_{DPF} \cdot C_{p\_DPF} \quad (24);$$

and

$$\Delta Q_{SCR\_warmup} = (T_{SCR\_Final\_Target} - T_{SCR\_int}) \cdot M_{SCR} \cdot C_{p\_SCR} \quad (25),$$

where: $avg\Delta P_{warmup}$ is the average additional power needed for all aftertreatment components to reach their final warm-up target temperature, $\Delta Q_{xxx\_warmup}$ is the additional energy needed for the aftertreatment component to reach its final target temperature, $T_{xxx\_Final\_Target}$ is the final target temperature for each aftertreatment component, $T_{xxx\_int}$ is the initial temperature of the aftertreatment component at the start of thermal management, $C_{p\_xxx}$ is the specific heat capacity of the aftertreatment component, $M_{xxx}$ is the mass of the aftertreatment component, and $Time_{warmup}$ is the estimated warm-up time for the SCR system 150 to warm-up to the target SCR bed temperature.

On the other hand, when the total power requested by the oxidation catalyst 130, the filter 140, and the SCR system 150 is higher than the average warm-up power, the controller 170 is configured to request the total power or sum power requested by all components. The engine 10 may then use this power request from the controller 170 to determine a limit for the heater power of the heater 108 to optimize $CO_2$ emissions.

When an oxidation catalyst inlet temperature of the oxidation catalyst 130 is below its light-off temperature, the oxidation catalyst 130 cannot catalyze combustion of the hydrocarbons inserted therein to generate heat. In such instances, the controller 170 is configured to determine the power requested from the oxidation catalyst 130 as being zero. On the contrary, when the oxidation catalyst inlet temperature is equal to or greater than its light-off temperature, the controller 170 may be configured to request a fraction of the total additional power that was to be request from the engine 10, from the oxidation catalyst 130. In some instances, the minimum hydrocarbon insertion rate may still be too high for the power request when the SCR system 150 is already warmed up. In such instances, the oxidation catalyst 130 power fraction will be higher if the SCR inlet temperature is less than a minimum reductant dosing limit, otherwise, the power fraction requested from the oxidation catalyst 130 will be lower or zero.

Since combustion of the hydrocarbons over the oxidation catalyst 130 is more efficient than drawing power from the heater 108, the controller 170 is configured to determine the power request from the oxidation catalyst 130 first, and then determine the power request from the heater 108. The heater power request is based on the remaining power needed for increasing the temperature, and thereby energy of the aftertreatment components, after subtracting the power requested from the oxidation catalyst 130 from the overall power (e.g., sum power) requested from the engine 10.

The controller 170 is configured to request a fraction of the remaining power from the heater 108. This heater power fraction may be high if the oxidation catalyst temperature is below its light-off temperature, otherwise the heater power may be based on algorithms, equations, or a lookup table based on the current filter outlet temperature, as previously described herein. The controller 170 may be configured to reduce the power requested from the heater 108 as the filter outlet temperature increases towards the target filter outlet temperature, so as to prevent temperature overshoot.

The controller 170 may also be configured to adjust the heater power fraction requested from the heater 108 based on operating conditions of the engine 10 so as to ensure that too high or too low power is not requested from the engine 10. For example, when the engine 10 is operating under warm idle condition when less power is available from the engine 10, the controller 170 may be configured to request a higher additional power from the engine 10 to increase the available power to the heater 108

When the engine 10 is motoring and/or the exhaust flow rate is low (e.g., when a vehicle including the engine 10 is moving under cruise control), for example, below a threshold, the heater 108 may keep heating up the exhaust gas proximate to the heater 108, but because of the low flow rate, the heated exhaust gas does not flow at sufficient rate to the downstream aftertreatment components. The downstream components may not heat up to their target temperatures, although the desired power is still being provided by the heater 108 because heat transfer is limited by the low exhaust flow rate. In this case, requesting additional power from the heater 108 will not be effective.

In such instances, in response to determining that a flow rate of the exhaust gas is below the threshold, the controller 170 may be configured to determine an estimated heater temperature, and determine a heater power limit based on the estimated heater temperature so as to deactivate the heater 108 when the heater power reaches the heater power limit. The controller 170 may be configured to adjust the heater power limit based on changes in the estimated heater temperature

In some embodiments, the controller 170 may be configured to limit heater power requested from the heater 108 based on equations, algorithms, or a lookup table based on estimated heater temperature changes over a time period. The controller 170 may be configured to reduce the heater power limit as the estimated heater temperature increases, and increase the heater power limit as the estimated heater temperature decreases, for example, using the following equations:

$$\Delta T_{Heater} = \frac{Q_{Htr\_in} - Q_{Htr\_out} + \Delta Q_{Htr}}{M_{Htr} \cdot C_{p\_Htr}} \quad (26);$$

$$Q_{Htr\_in} = \int_{t=0}^{t=Time\_Htr} T_{Htr\_in} \cdot Flow\_Rate \cdot C_{p\_exh} dt \quad (27);$$

$$Q_{Htr\_out} = \int_{t=0}^{t=Time\_Htr} T_{Htr\_out} \cdot Flow\_Rate \cdot C_{p\_exh} dt \quad (28);$$

and

$$\Delta Q_{Htr} = \int_{t=0}^{t=Time\_Htr} P_{Htr} dt \quad (29),$$

where: $\Delta T_{Heater}$ is the change in heater temperature, $Q_{Htr\_in}$ is the heater inlet flow energy, $Q_{Htr\_out}$ is the heater outlet flow energy, $\Delta Q_{Htr}$ is the energy generated by heater 108, $M_{Htr}$ is the heater mass, $C_{p\_Htr}$ is the heater specific heat capacity, $T_{Htr\_in}$ is the heater inlet gas temperature, $T_{Htr\_out}$ is the heater outlet gas temperature, $P_{Htr}$ is the power generated by heater 108, and $Time\_Htr$ is the time period to estimate heater temperature changes.

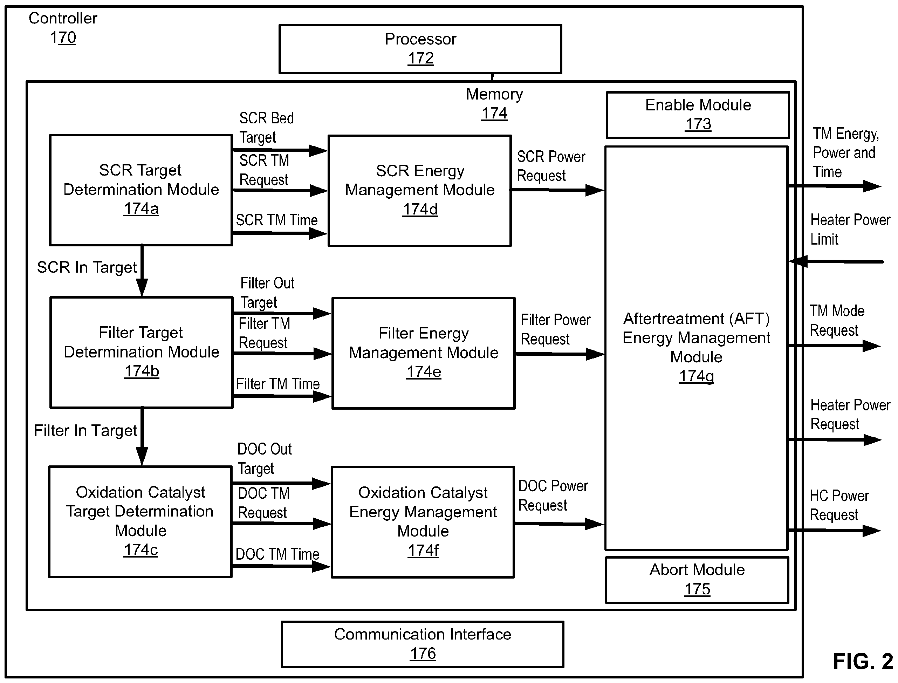

In some embodiments, the controller 170 includes various circuitries or modules configured to perform the operations of the controller 170 described herein. For example, FIG. 2 shows a schematic block diagram of the controller 170, according to an embodiment. The controller 170 may include a processor 172, a memory 174, or any other computer readable medium, and a communication interface 176. Furthermore, the controller 170 includes an enable module 173, an abort module 175, a SCR target determination module 174a, a filter target determination module 174b, an oxidation catalyst target determination module 174c, a SCR energy management module 174d, a filter energy management module 174e, an oxidation catalyst energy management module 174f, and an aftertreatment energy management module 174g. It should be understood that FIG. 2 shows only one embodiment of the controller 170 and any other controller capable of performing the operations described herein can be used.

The processor 172 can include a microprocessor, programmable logic controller (PLC) chip, an ASIC chip, or any other suitable processor. The processor 172 is in communication with the memory 174 and configured to execute instructions, algorithms, commands, or otherwise programs stored in the memory 174.

The memory 174 comprises any of the memory and/or storage components discussed herein. For example, memory 174 may comprise a RAM and/or cache of processor 172. The memory 174 may also comprise one or more storage devices (e.g., hard drives, flash drives, computer readable media, etc.) either local or remote to controller 170. The memory 174 is configured to store look up tables, algorithms, or instructions.

In one configuration, the enable module 173, the abort module 175, the SCR target determination module 174a, the filter target determination module 174b, the oxidation catalyst target determination module 174c, the SCR energy management module 174d, the filter energy management module 174e, the oxidation catalyst energy management module 174f, and the aftertreatment energy management module 174g are embodied as machine or computer-readable media (e.g., stored in the memory 174) that is executable by a processor, such as the processor 172. As described herein and amongst other uses, the machine-readable media (e.g., the memory 174) facilitates performance of certain operations of the enable module 173, the abort module 175, the SCR target determination module 174a, the filter target determination module 174b, the oxidation catalyst target determination module 174c, the SCR energy management module 174d, the filter energy management module 174e, the oxidation catalyst energy management module 174f, and the aftertreatment energy management module 174g to enable reception and transmission of data. For example, the machine-readable media may provide an instruction (e.g., command, etc.) to, e.g., acquire data. In this regard, the machine-readable media may include programmable logic that defines the frequency of acquisition of the data (or, transmission of the data). Thus, the computer readable media may include code, which may be written in any programming language including, but not limited to, Java or the like and any conventional procedural programming languages, such as the "C" programming language or similar programming languages. The computer readable program code may be executed on one processor or multiple remote processors. In the latter scenario, the remote processors may be connected to each other through any type of network (e.g., CAN bus, etc.).

In another configuration, the enable module 173, the abort module 175, the SCR target determination module 174a, the filter target determination module 174b, the oxidation catalyst target determination module 174c, the SCR energy management module 174d, the filter energy management module 174e, the oxidation catalyst energy management module 174f, and the aftertreatment energy management module 174g are embodied as hardware units, such as electronic control units. As such, the enable module 173, the abort module 175, the SCR target determination module 174a, the filter target determination module 174b, the oxidation catalyst target determination module 174c, the SCR energy management module 174d, the filter energy management module 174e, the oxidation catalyst energy management module 174f, and the aftertreatment energy management module 174g may be embodied as one or more circuitry components including, but not limited to, processing circuitry, network interfaces, peripheral devices, input devices, output devices, sensors, etc.

In some embodiments the enable module 173, the abort module 175, the SCR target determination module 174a, the filter target determination module 174b, the oxidation catalyst target determination module 174c, the SCR energy management module 174d, the filter energy management module 174e, the oxidation catalyst energy management module 174f, and the aftertreatment energy management module 174g may take the form of one or more analog circuits, electronic circuits (e.g., integrated circuits (IC), discrete circuits, system on a chip (SOCs) circuits, microcontrollers, etc.), telecommunication circuits, hybrid circuits, and any other type of "circuit." In this regard, the enable module 173, the abort module 175, the SCR target determination module 174a, the filter target determination module 174b, the oxidation catalyst target determination module 174c, the SCR energy management module 174d, the filter energy management module 174e, the oxidation catalyst energy management module 174f, and the aftertreatment energy management module 174g may include any type of component for accomplishing or facilitating achievement of the operations described herein. For example, a circuit as described herein may include one or more transistors, logic gates (e.g., NAND, AND, NOR, OR, XOR, NOT, XNOR, etc.), resistors, multiplexers, registers, capacitors, inductors, diodes, wiring, and so on.

Thus, the enable module 173, the abort module 175, the SCR target determination module 174a, the filter target determination module 174b, the oxidation catalyst target determination module 174c, the SCR energy management module 174d, the filter energy management module 174e, the oxidation catalyst energy management module 174f, and the aftertreatment energy management module 174g may also include programmable hardware devices such as field programmable gate arrays, programmable array logic, programmable logic devices or the like. In this regard, the enable module 173, the abort module 175, the SCR target determination module 174a, the filter target determination module 174b, the oxidation catalyst target determination module 174c, the SCR energy management module 174d, the filter energy management module 174e, the oxidation catalyst energy management module 174f, and the aftertreatment energy management module 174g may include one or more memory devices for storing instructions that are executable by the processor(s) of the enable module 173, the abort module 175, the SCR target determination module 174a, the filter target determination module 174b, the oxidation catalyst target determination module 174c, the SCR energy management module 174d, the filter energy management module 174e, the oxidation catalyst energy management module 174f, and the aftertreatment energy management module 174g. The one or more memory devices and processor(s) may have the same definition as provided below with respect to the memory 174 and the processor 172.

In the example shown, the controller 170 includes the processor 172 and the memory 174. The processor 172 and the memory 174 may be structured or configured to execute or implement the instructions, commands, and/or control processes described herein with respect to the enable module 173, the abort module 175, the SCR target determination module 174a, the filter target determination module 174b, the oxidation catalyst target determination module 174c, the SCR energy management module 174d, the filter energy management module 174e, the oxidation catalyst energy management module 174f, and the aftertreatment energy management module 174g. Thus, the depicted configuration represents the aforementioned arrangement in which the enable module 173, the abort module 175, the SCR target determination module 174a, the filter target determination module 174b, the oxidation catalyst target determination module 174c, the SCR energy management module 174d, the filter energy management module 174e, the oxidation catalyst energy management module 174f, and the aftertreatment energy management module 174g are embodied as machine or computer-readable media. However, as mentioned above, this illustration is not meant to be limiting as the present disclosure contemplates other embodiments such as the aforementioned embodiment where the enable module 173, the abort module 175, the SCR target determination module 174a, the filter target determination module 174b, the oxidation catalyst target determination module 174c, the SCR energy management module 174d, the filter energy management module 174e, the oxidation catalyst energy management module 174f, and the aftertreatment energy management module 174g, or at least one circuit of the enable module 173, the abort module 175, the SCR target determination module 174a, the filter target determination module 174b, the oxidation catalyst target determination module 174c, the SCR energy management module 174d, the filter energy management module 174e, the oxidation catalyst energy management module 174f, and the aftertreatment energy management module 174g are configured as a hardware unit. All such combinations and variations are intended to fall within the scope of the present disclosure.

The processor 172 may be implemented as one or more general-purpose processors, an application specific integrated circuit (ASIC), one or more field programmable gate arrays (FPGAs), a digital signal processor (DSP), a group of processing components, or other suitable electronic processing components. In some embodiments, the one or more processors may be shared by multiple circuits (e.g., the enable module 173, the abort module 175, the SCR target determination module 174a, the filter target determination module 174b, the oxidation catalyst target determination module 174c, the SCR energy management module 174d, the filter energy management module 174e, the oxidation catalyst energy management module 174f, and the aftertreatment energy management module 174g) may comprise or otherwise share the same processor which, in some example embodiments, may execute instructions stored, or otherwise accessed, via different areas of memory).

Alternatively or additionally, the one or more processors may be structured to perform or otherwise execute certain operations independent of one or more co-processors. In other example embodiments, two or more processors may be coupled via a bus to enable independent, parallel, pipelined, or multi-threaded instruction execution. All such variations are intended to fall within the scope of the present disclosure. The memory 174 (e.g., RAM, ROM, Flash Memory, hard disk storage, etc.) may store data and/or computer code for facilitating the various processes described herein. The memory 174 may be communicably connected to the processor 172 to provide computer code or instructions to the processor 172 for executing at least some of the processes described herein. Moreover, the memory 174 may be or include tangible, non-transient volatile memory or non-volatile memory. Accordingly, the memory 174 may include database components, object code components, script components, or any other type of information structure for supporting the various activities and information structures described herein.

The communication interface 176 may include wireless interfaces (e.g., jacks, antennas, transmitters, receivers, communication interfaces, wire terminals, etc.) for conducting data communications with various systems, devices, or networks. For example, the communication interface 176 may include an Ethernet card and port for sending and receiving data via an Ethernet-based communications network and/or a Wi-Fi communication interface for communicating with the engine 10, the first sensor 103, the second sensor 105, the temperature sensors 131, 141, 143, 153, 155, the reductant insertion assembly 120, and the hydrocarbon insertion assembly 122. The communication interface 176 may be structured to communicate via local area networks or wide area networks (e.g., the Internet, etc.) and may use a variety of communications protocols (e.g., IP, LON, Bluetooth, ZigBee, radio, cellular, near field communication, etc.).

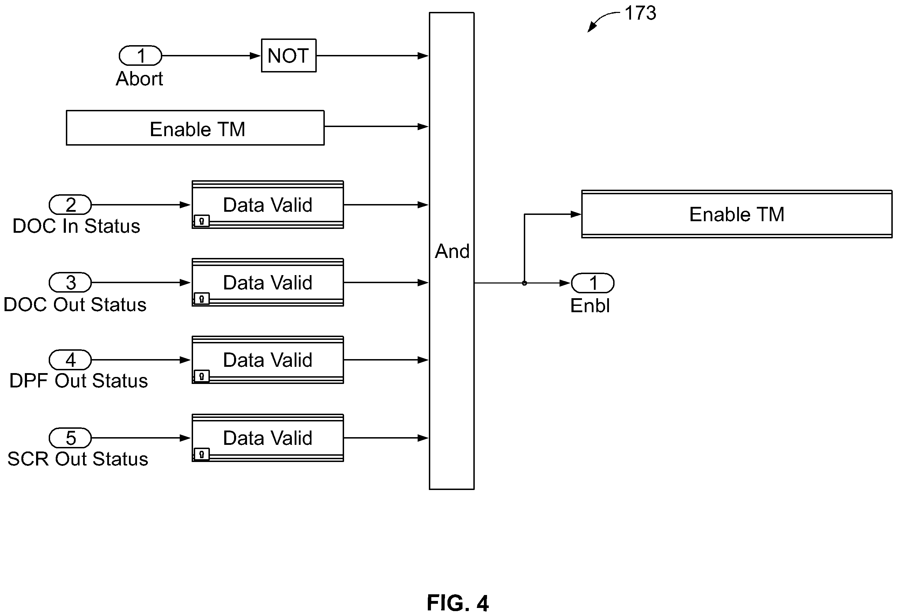

The enable module 173 is configured to enable thermal management when certain conditions are met. FIG. 4 is a block diagram of an example embodiment of the enable module 173. In response to receive a thermal management enable signal ("enable TM"), and there being no abort signal, the enable module determines receives an oxidation catalyst inlet status ("DOC in status"), an oxidation catalyst outlet status ("DOC out status), a filter outlet status ("DPF out status"), and a SCR outlet status ("SCR out status"). In response, to data for each of these being valid ("data valid"), the enable module 173 enables thermal management of the aftertreatment system 100 by the controller 170.

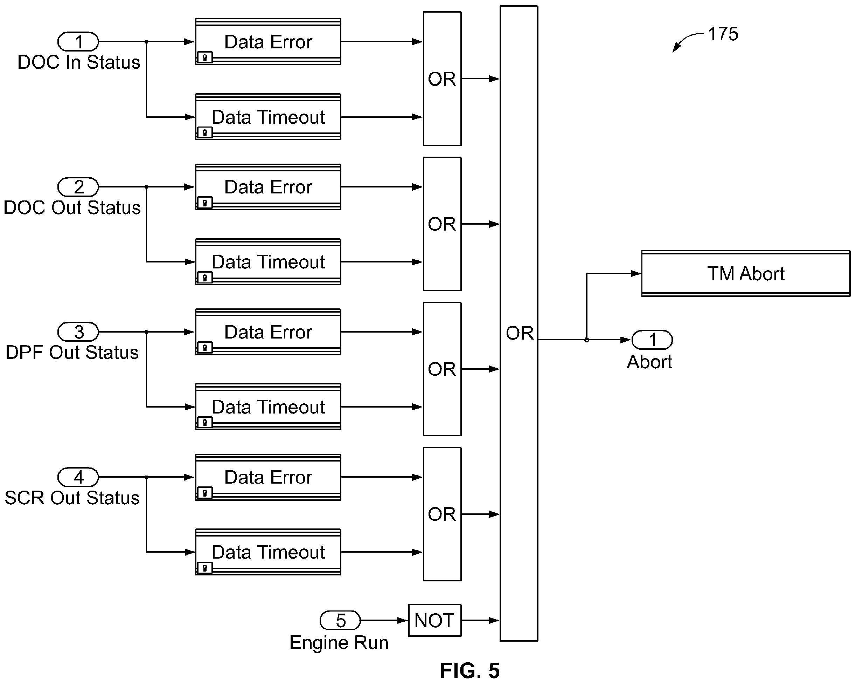

The abort module 175 is configured to abort thermal management when certain conditions are met. FIG. 5 is a block diagram of an example embodiment of the abort module 175. The abort module 175 receives the DOC in status, the DOC out status, the DPF out status, SCR out status, and engine run status. If the engine is not running, any of the above received data is invalid ("data error"), the data is not received within a predetermined time ("data timeout"), or an abort signal is received, the abort module 175 is configured to abort thermal management.

As shown in FIG. 2, the SCR target determination module 174a is configured to determine the target SCR bed temperature ("SCR bed target"), whether a SCR thermal management is requested ("SCR TM request"), an estimated SCR warm-up time ("SCR TM time"), and a target SCR inlet temperature ("SCR in target"), as previously described herein. When SCR thermal management is requested, the SCR target determination module 174a communicates the SCR bed target, the SCR TM request, and the SCR TM time to the SCR energy management module 174d, and the SCR in target to the filter target determination module.

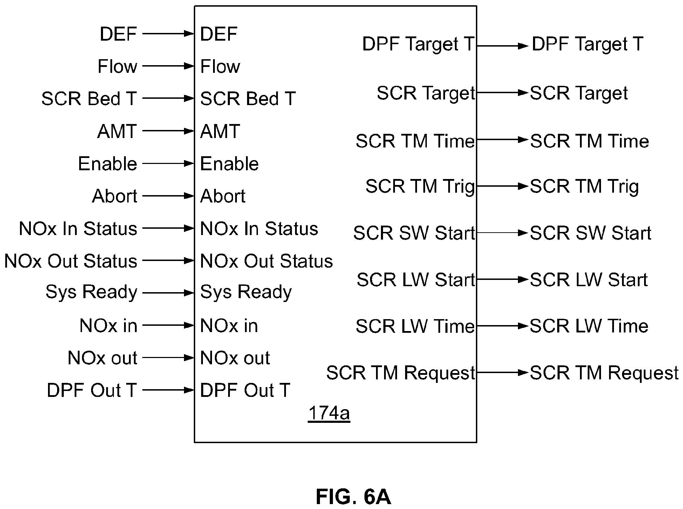

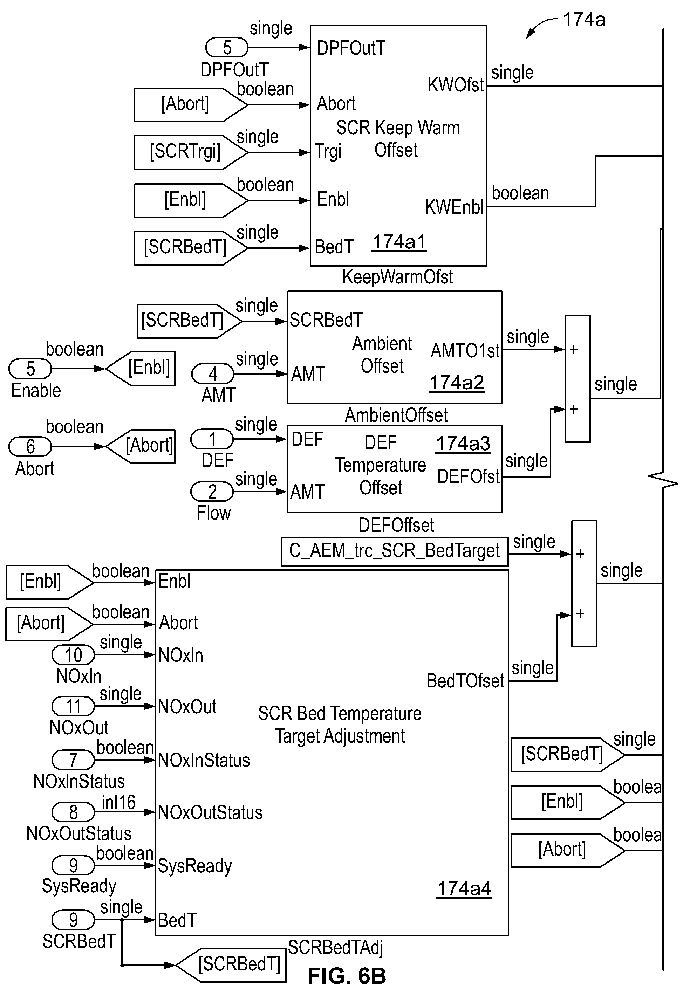

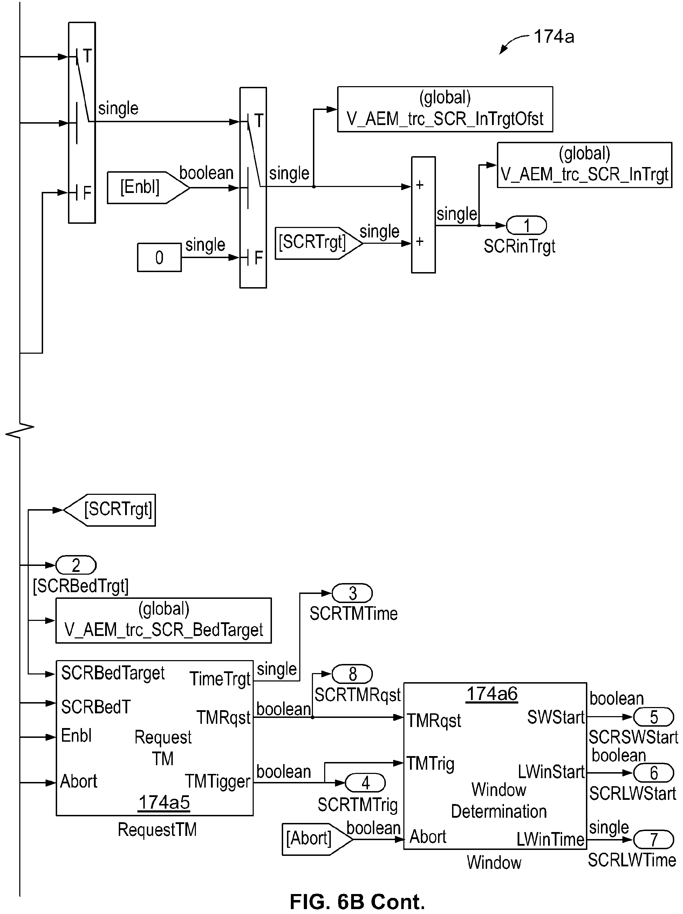

FIG. 6A is block diagram of the SCR target determination module 174a, and FIG. 6B is another block diagram illustrating submodules that may be included SCR target determination module 174a, according to an example embodiment. FIG. 6A shows various inputs and outputs of the SCR target determination module 174a. For example, the SCR target determination module 174a may receive information regarding the inserted reductant ("DEF"), for example, reductant insertion rate and/or mass, an exhaust gas flow rate ("flow"), a SCR bed temperature ("SCR bed T"), ambient temperature ("AMT"), an thermal management enable signal ("enable") or a thermal management abort signal ("abort"), an EONO$_X$ status signal ("NO$_X$ in status"), an outlet NO$_X$ status signal, (NO$_X$ out status"), a system ready signal ("Sys ready"), an EONO$_X$ amount signal ("NO$_X$ in"), an outlet NO$_X$ amount signal ("NO$_X$ out"), and a filter outlet temperature signal ("DPF out T"). If the enable signal is true, there is no abort signal, and the system is ready, the SCR target determination module 174a determines and outputs signals corresponding to the target filter temperature ("DPF target T"), the target SCR bed temperature ("SCR target"), estimated SCR warm-up time ("SCR TM time"), a SCR thermal management trigger signal ("SCR TM trig"), a SCR short time window start signal ("SCR SW start"), a SCR long time window start signal ("SCR LW start"), a SCR long time window time signal ("SCR LW time"), and a SCR thermal management request signal ("SCR TM request").

As shown in FIG. 6B, the SCR target determination module 174a may include a SCR keep warm offset submodule 174a1, an ambient temperature offset submodule 174a2, a DEF temperature offset submodule 174a3, a SCR bed target adjustment submodule 174a4, a request TM submodule 174a5, and a window determination submodule 174a6. The SCR keep warm offset submodule 174a1 is configured to determine a temperature offset for the SCR system 150 when the SCR system 150 is already warm and needs to be kept warm, when an enable signal is received and there is no abort signal. The submodule 174a1 determines the SCR temperature offset based on a received target SCR bed temperature signal ("SCR bed T"), a target SCR outlet temperature ("SCR trgt"), and a filter outlet temperature ("DPF out T"). Using various Boolean operations, submodule 174a1 determines a target SCR inlet offset temperature ("SCR in trgtofst") and adds it to a target SCR temperature determine a target SCR inlet temperature ("SCR in trgt").

The ambient temperature offset submodule 174a2 is configured to use the ambient temperature ("AMT") and the SCR bed temperature to determine the ambient temperature offset, as previously described. The DEF temperature offset submodule 174a3 is configured to use reductant mass and flow rate to determine reductant temperature losses, as previously described. Each of these are added to the target SCR temperature to determine the target SCR inlet temperature when the SCR system 150 is warming up.

The SCR bed target adjustment submodule 174a4 is configured to receive the $NO_X$ in, the $NO_X$ out, the $NO_X$ in status, $NO_X$ out status, the sys ready, and the SCR bed T signals once the submodule is enabled, and determines a SCR bed temperature offset from these parameters. The submodule 174a4 adds this offset to an initial target SCR bed temperature to determine the target SCR bed temperature.

The request TM submodule 174a5 receives the target SCR bed signal and the current SCR bed T when an enable signal is received, and determines the estimated SCR warm-up time ("SCR TM time") as well as generates a SCR thermal management trigger, and a SCR thermal management request signal ("SCR TM request") that is communicated to the engine 10. The window determination submodule 174a6 the SCR TM request and SCR thermal management request signals from the submodule 174a5, and generates a signal indicative of a long time window length ("SCR LW time"), and trigger signals to start the long time windows ("SCR LW start") and the short time windows ("SCR SW start").

The filter target determination module 174b is configured to receive the target SCR inlet temperature from the SCR target determination module 174a. The filter target determination module 174b determines a target filter outlet temperature ("filter out target"), whether a filter thermal management is requested ("filter TM request"), an estimated filter warm-up time ("filter TM time"), and a target filter inlet temperature ("filter in target"), as previously described herein. When filter thermal management is requested, the filter target determination module 174b communicates the filter out target, the filter TM request, and the filter TM time to the filter energy management module 174e, and the SCR in target to the filter target determination module 174b.

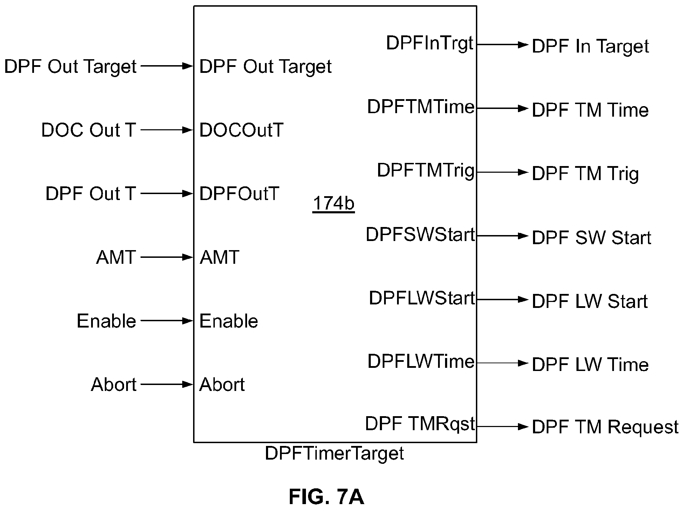

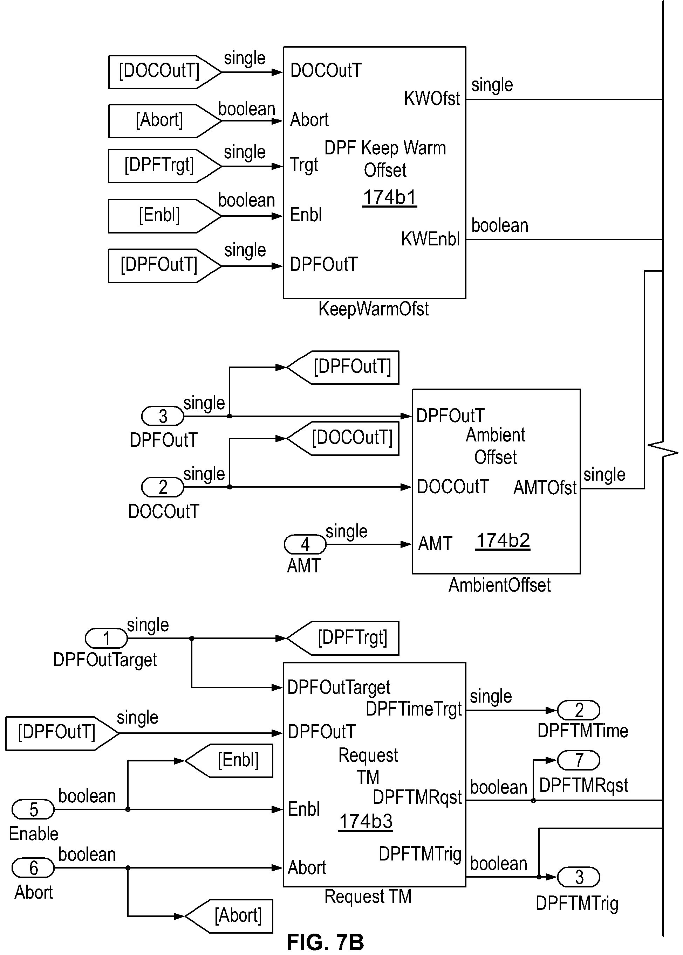

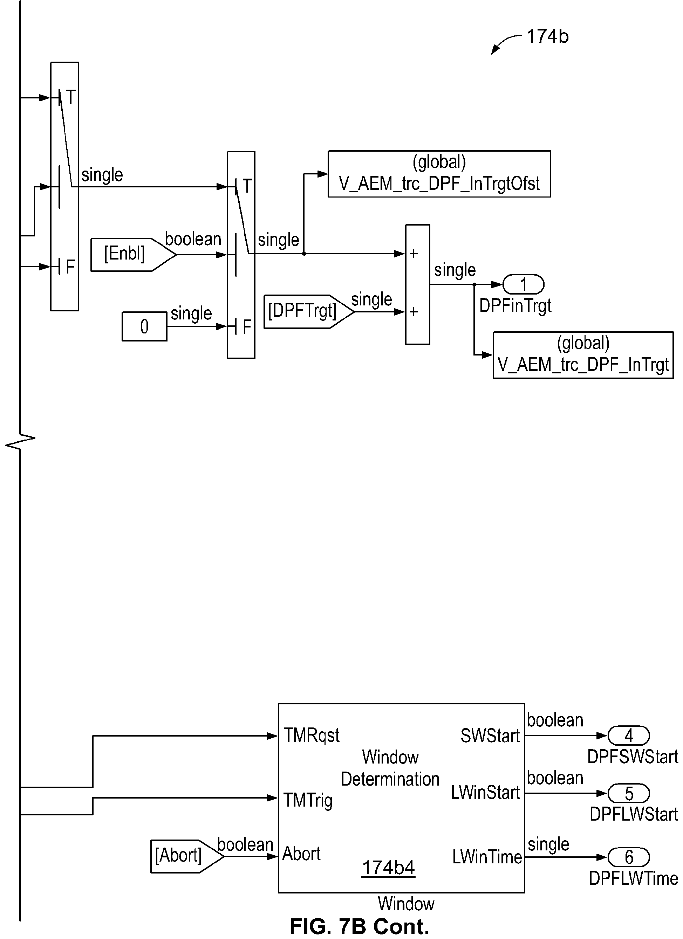

FIG. 7A is a block diagram of the filter target determination module 174b, and FIG. 7B is another block diagram illustrating submodules that may be included in the filter target determination module 174b, according to an example embodiment. FIG. 7A shows various inputs and outputs of the filter target determination module 174b. For example, the filter target determination module 174b may receive information regarding the target filter outlet temperature ("DPF out target"), an oxidation catalyst outlet temperature ("DOC out T), the DPF out T, the AMT, the enable signal, or the abort signal. If the enable signal is true and there is no abort signal, the filter target determination module 174b determines and outputs signals corresponding to the target filter inlet temperature ("DPF in target"), the estimated filter warm-up time ("DPF TM time"), a filter thermal management trigger signal ("DPF TM trig"), a filter short time window start signal ("DPF SW start"), a filter long time window start signal ("DPF LW start"), a filter long time window length signal ("filter LW time"), and a filter thermal management request signal ("filter TM request").

As shown in FIG. 7B, the filter target determination module 174b may include a filter keep warm offset submodule 174b1, a filter ambient temperature offset submodule 174b2, a filter request TM submodule 174b3, and a filter window determination submodule 174b4. The filter keep warm offset submodule 174b1 is configured to determine a temperature offset for the filter 140 when the filter 140 is already warm and needs to be kept warm. When an enable signal is received and there is no abort signal, the submodule 174b1 is configured to determine the temperature offset based on an oxidation catalyst outlet temperature ("DOC out T") and a filter outlet temperature ("DPF out T"). Using various Boolean operations, submodule 174b1 determines a target filter inlet offset temperature ("DPF in trgtofst") and adds it to a target filter temperature ("DPF trgt") to determine a filter inlet target temperature ("DPF in trgt").

The filter ambient temperature offset submodule 174b2 is configured to use the ambient temperature ("AMT"), the filter outlet temperature ("DPF out T"), and the oxidation catalyst outlet temperature ("DOC out T") to determine the ambient temperature offset, as previously described. This is added to the target filter temperature to determine the target filter inlet temperature when the filter 140 is still warming up. The filter request TM submodule 174b3 receives the DPF out T and DPF out Target when an enable signal is received, and determines the estimated filter warm-up time ("DPF TM time") as well as generates a filter thermal management trigger ("filter TM trig"), and a filter thermal management request signal ("filter TM request") that is communicated to the engine 10. The filter window determination submodule 174b4 receives the filter TM request and filter thermal management request signals from the submodule 174b3, and generate a signal indicative of a filter long time window length ("filter LW time"), and trigger signals to start the filter long time windows ("filter LW start") and the filter short time windows ("filter SW start").

The oxidation catalyst target determination module 174c is configured to receive the target filter inlet temperature from the filter target determination module 174b. The oxidation catalyst target determination module 174c determines a target oxidation catalyst outlet temperature ("DOC out target"), whether an oxidation catalyst thermal management is requested ("DOC TM request"), and an estimated oxidation catalyst warm-up time ("DOC TM time"), as previously described herein. When oxidation catalyst thermal management is requested, the oxidation catalyst target determination module 174c communicates the DOC out target, the DOC TM request, and the DOC TM time, to the oxidation catalyst energy management module 174f.

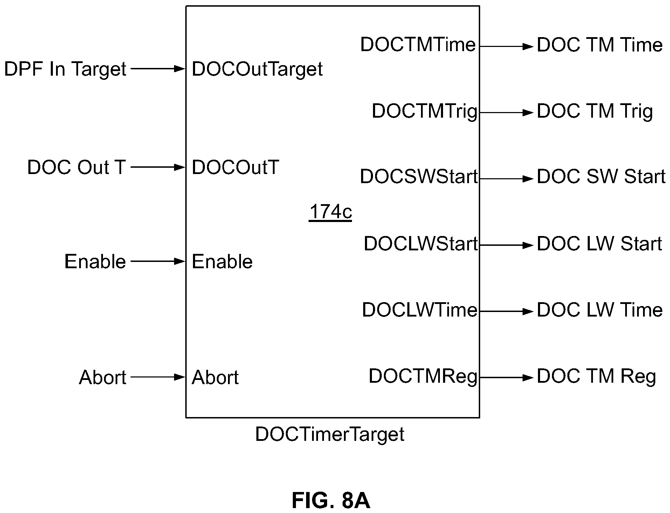

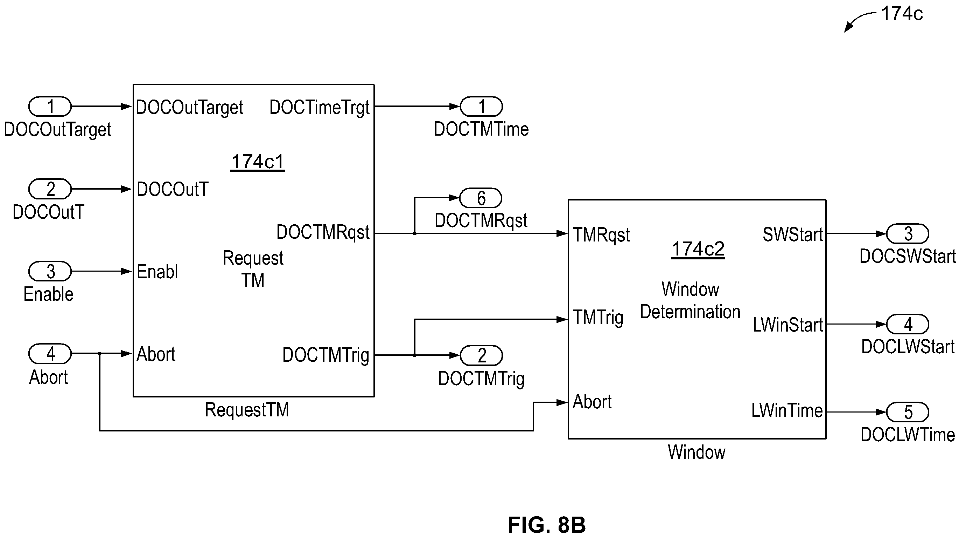

FIG. 8A is block diagram of the oxidation catalyst target determination module 174c, and FIG. 8B is another block diagram illustrating submodules that may be included oxidation catalyst target determination module 174c, according to an example embodiment. FIG. 8A shows various inputs and outputs of the oxidation catalyst target determination module 174c. For example, the oxidation catalyst target determination module 174c may receive information regarding the target filter inlet temperature ("DPF in target"), the DOC out T, the enable signal, or the abort signal. If the enable signal is true and there is no abort signal, the oxidation catalyst target determination module 174c determines and outputs signals corresponding to the estimated oxidation catalyst warm-up time ("DOC TM time"), an oxidation catalyst thermal management trigger signal ("DOC TM trig"), an oxidation catalyst short time window start signal ("DOC SW start"), an oxidation catalyst long time window start signal ("DOC LW start"), an oxidation catalyst long time window time signal ("DOC LW time"), and an oxidation catalyst thermal management request signal ("DOC TM request").

As shown in FIG. 8B, the oxidation catalyst target determination module 174c may include an oxidation catalyst request TM submodule 174c1, and an oxidation catalyst window determination submodule 174c2. The oxidation catalyst request TM submodule 174c1 receives the target filter outlet temperature ("DOC out target"), and the current filter outlet temperature ("DOC out T") when an enable signal is received, and determines the estimated oxidation catalyst warm-up time ("DOC TM time") as well as generates an oxidation catalyst thermal management trigger ("DOC TM trig"), and an oxidation catalyst thermal management request signal ("DOC TM request") that is communicated to the engine 10. The oxidation catalyst window determination submodule 174c2 receives the DOC TM request and the DOC TM trig signals from the submodule 174c1, and generates a signal indicative of an oxidation catalyst long time window length ("DOC LW time"), and trigger signals to start the oxidation catalyst long time windows ("DOC LW start") and the oxidation catalyst short time windows ("DOC SW start").

The SCR energy management module 174d is configured to receive the SCR bed target, the SCR TM request, and the SCR TM time from the SCR target determination module 174a, and determine a SCR power request, i.e., the additional power to be requested from the engine to warm up the SCR system 150 to its SCR bed target. The SCR energy management module 174d is configured to communicate a SCR power request signal to the AFT energy management module 174g.

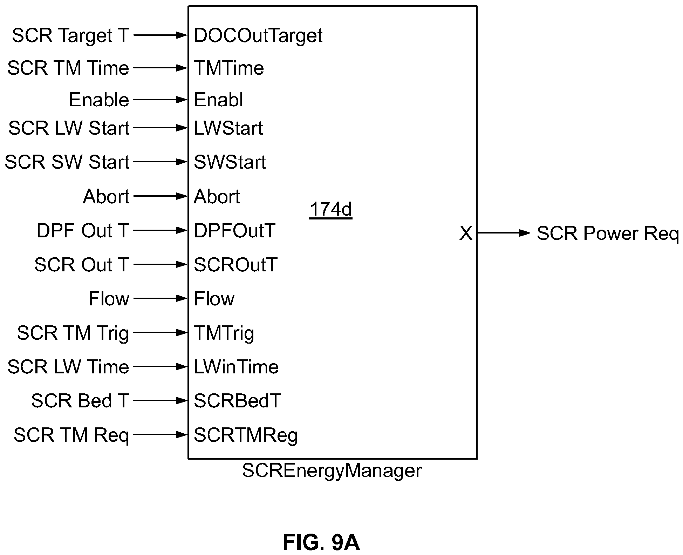

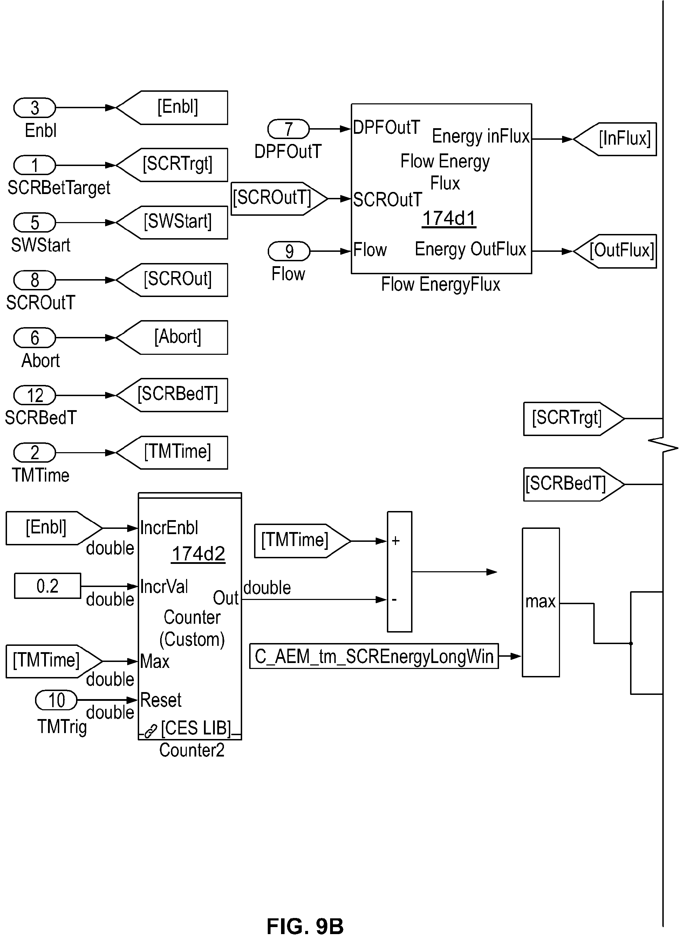

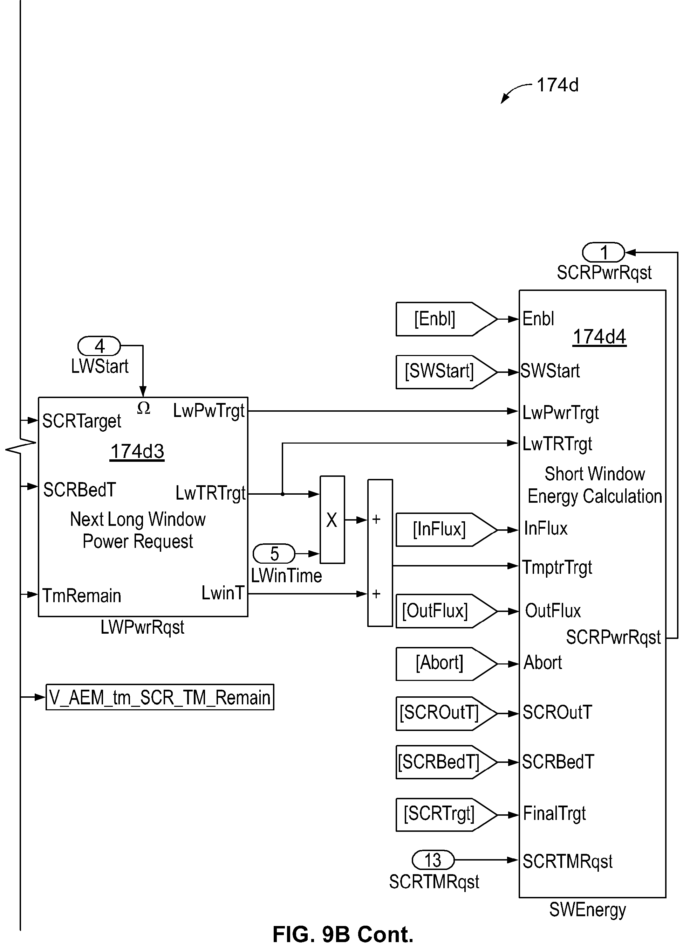

FIG. 9A is block diagram of the SCR energy management module 174d, and FIG. 9B is another block diagram illustrating submodules that may be included in SCR energy management module 174d, according to an example embodiment. FIG. 9A shows various inputs and outputs of the SCR energy management module 174d. For example, the SCR energy management module 174d may receive information regarding the target SCR temperature ("SCR target T"), the filter outlet temperature ("DPF out T"), the SCR outlet temperature ("SCR out T"), the exhaust gas flow rate ("Flow"), the current SCR bed temperature ("SCR bed T"), the estimated SCR warm-up time ("SCR TM time"), the SCR LW start signal, the SCR SW start signal, the SCR TM trig signal, the SCR LW time signal, and the SCR TM request signal, the enable signal, or the abort signal. If the enable signal is true and there is no abort signal, the SCR energy management module 174d determines the SCR power request, and outputs the SCR power request signal.

As shown in FIG. 9B, the SCR energy management module 174d may include an flow energy flux determination submodule 174d1, a SCR counter submodule 174d2, a SCR LW power request submodule 174d3, and a short time window energy calculation submodule 174d4. The flow energy flux determination submodule 174d1 receives the filter outlet temperature ("DPF out T"), the SCR outlet temperature ("SCR out T"), and the exhaust gas flow rate ("flow") and determines and outputs the energy influx into the exhaust gas and energy out flux (i.e., energy loss) from the exhaust gas over the SCR system 150.

The SCR counter submodule 174d2 is configured to start a timer at the beginning of SCR thermal management, as previously described. For example, in response to receiving an enable signal ("enable"), and a thermal management trigger signal ("TM trig"), the submodule 174d2 uses a predetermine increment value (e.g., 0.2 seconds), and the estimated SCR warm-up time ("TM time") and runs for a length of estimated SCR warm-up time. The SCR LW power request submodule 174d3 receives the SCR target T, the SCR bed T, and the larger value of a SCR thermal management remaining time (SCR TM remain), and the length of the SCR long time window ("SCR energy long time window"), and in response to long time window start signal ("LW start"), determines a target additional power for a next long time window ("LW pwr trgt"), a target temperature for the next long time window ("LW TR trgt"), and an SCR initial temperature at the beginning of the next long time window ("LW in T").

Moreover, the short time window energy calculation submodule 174d4 is configured to use the target additional power for the next long time window, the target temperature for the next long time window, and a target temperature for the next short time window, which is determined based on SCR initial temperature ("LW in T") and the length of the long time window ("LW in time"), along with the determined energy influx, the energy out flux the current SCR outlet temperature, the current SCR bed temperature, the target SCR target temperature at the end of the short time window ("SCR trgt"), to determine the SCR power request for the short time window when an enable signal, a SCR TM request signal and a SW start signal are received, as previously described.

The filter energy management module 174e is configured to receive the filter out target, the filter TM request, and the filter TM time from the filter target determination module 174b, and determine a filter power request, i.e., the additional power to be requested from the engine to warm up the filter 140 to its filter out target. The filter energy management module 174b is configured to communicate a filter power request signal to the AFT energy management module 174g.

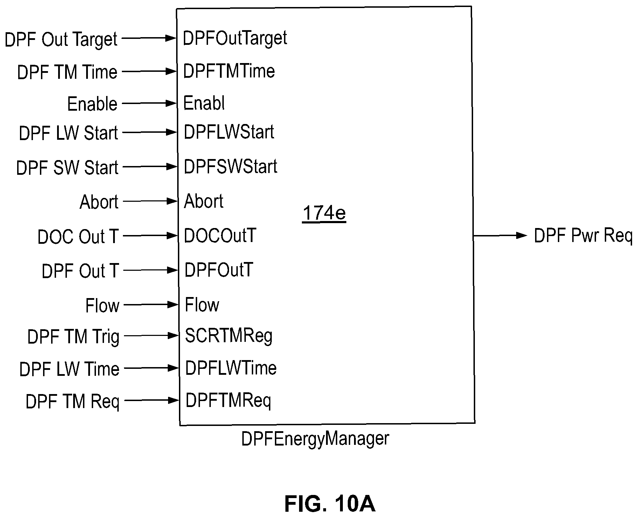

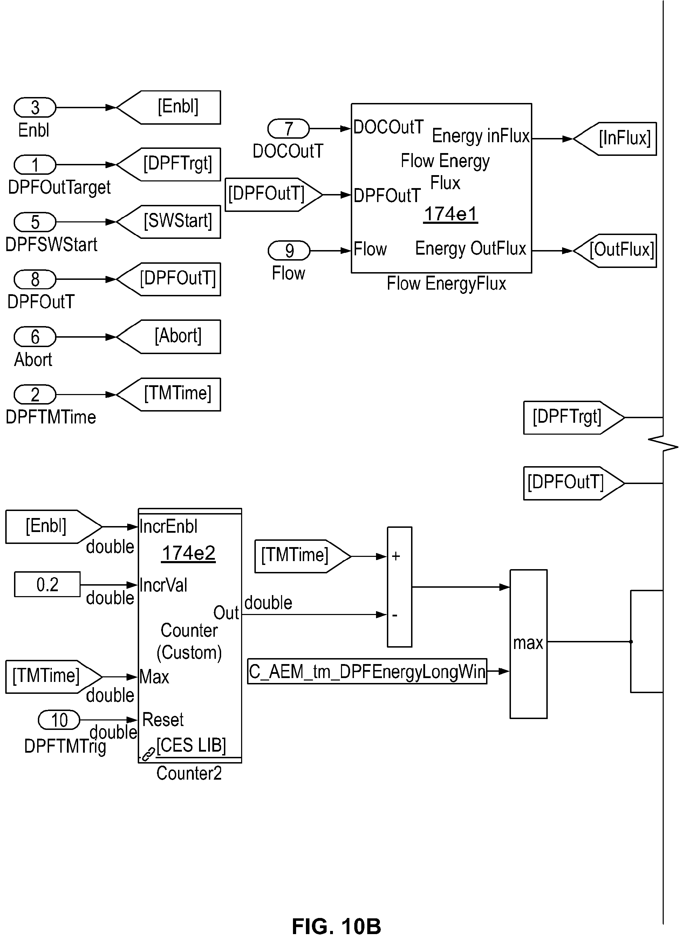

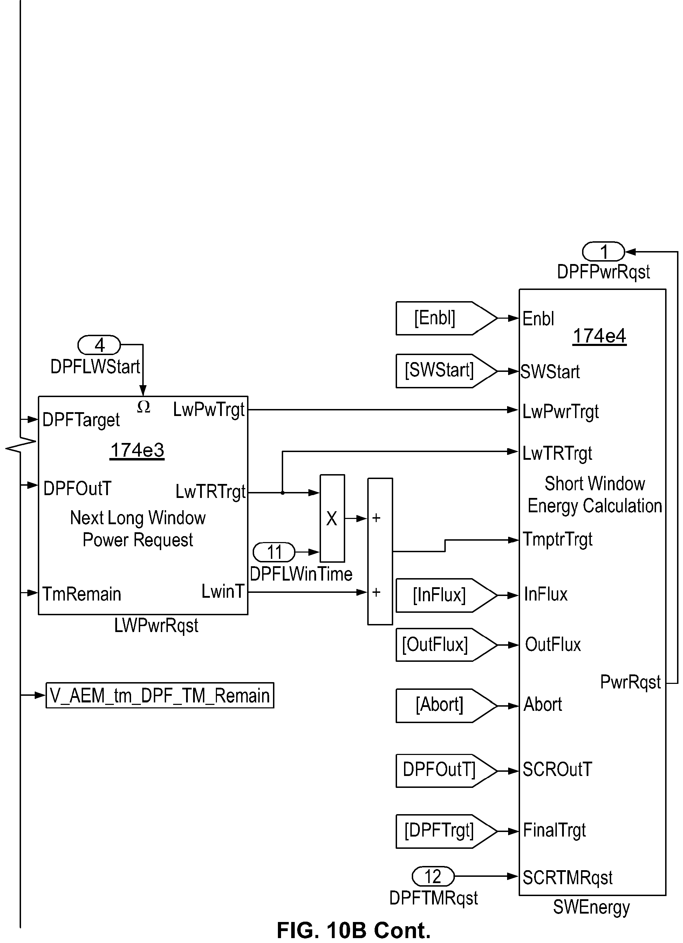

FIG. 10A is block diagram of the filter energy management module 174e, and FIG. 10B is another block diagram illustrating submodules that may be included in filter energy management module 174e, according to an example embodiment. FIG. 10A shows various inputs and outputs of the filter energy management module 174e. For example, the filter energy management module 174e may receive information regarding the target filter outlet temperature ("DPF out target"), the estimated filter warm-up time ("DPF TM time"), the oxidation catalyst outlet temperature ("DOC out T"), the filter outlet temperature ("DPF out T"), the exhaust gas flow rate ("Flow"), the filter long time window start signal ("DPF LW start"), the filter short time window start signal ("DPF SW start"), the filter thermal management trigger signal ("DPF TM trig"), the filter long time window signal ("DPF LW time"), the filter thermal request signal ("DPF TM request"), the enable signal, or the abort signal. If the enable signal is true and there is no abort signal, the filter energy management module 174e determines the filter power request ("DPF pwr req"), and outputs the DPF pwr req to the AFT energy management module 174g.

As shown in FIG. 10B, similar to the SCR energy management module 174d, the filter energy management module 174e may include an flow energy flux determination submodule 174e1, a filter counter submodule 174e2, a filter LW power request submodule 174e3, and a filter short time window energy calculation submodule 174e4. The flow energy flux determination submodule 174e1 receives the filter outlet temperature ("DPF out T"), the oxidation catalyst outlet temperature ("DOC out T"), and the exhaust gas flow rate ("flow"), and determines and outputs the energy influx into the exhaust gas and energy out flux (i.e., energy loss) from the exhaust gas over the filter 140.

The filter counter submodule 174e2 is configured to start a timer at the beginning of filter thermal management, as previously described. For example, in response to receiving an enable signal ("enable"), and a filter thermal management trigger signal ("DPF TM trig"), the submodule 174e2 uses a predetermined increment value (e.g., 0.2 seconds), and the estimated filter warm-up time ("TM time") and runs for a length of estimated filter warm-up time. The filter LW power request submodule 174e3 receives the filter target temperature ("DPF trgt T"), the filter outlet temperature ("DPF out T"), and the larger value of a filter thermal management remaining time ("TM remain"), and the length of the filter long time window ("DPF energy long time window"). In response to a long time window start signal ("LW start"), the submodule 174e3 determines a target filter additional power for a next long time window ("LW pwr trgt"), a target filter temperature for the next long time window ("LW TR trgt"), and an filter initial temperature at the beginning of the next long time window ("LW in T") for the filter 140.

Moreover, the filter short time window energy calculation submodule 174e4 is configured to use the target additional power for the next long time window, the target temperature for the next long time window, and a target temperature for the next short time window determined based on the filter initial temperature, and the length of the long time window ("DPF LW time"), along with the determined energy influx, the energy out flux, current filter outlet temperature ("DPF out T"), target filter outlet temperature ("DPF trgt") when an enable signal, a DPF TM request signal and a SW start signal is received, to determine the filter power request ("DPF pwr req") for the short time window, as previously described.

The oxidation catalyst energy management module 174f is configured to receive the DOC out target, the DOC TM request, and the DOC TM time from the oxidation catalyst target determination module 174c, and determines an oxidation catalyst power request, i.e., the additional power to be requested from the engine 10 to warm up the oxidation catalyst 130 to the target oxidation catalyst outlet temperature. The oxidation catalyst energy management module 174f is configured to communicate an oxidation catalyst power request signal to the AFT energy management module 174g.

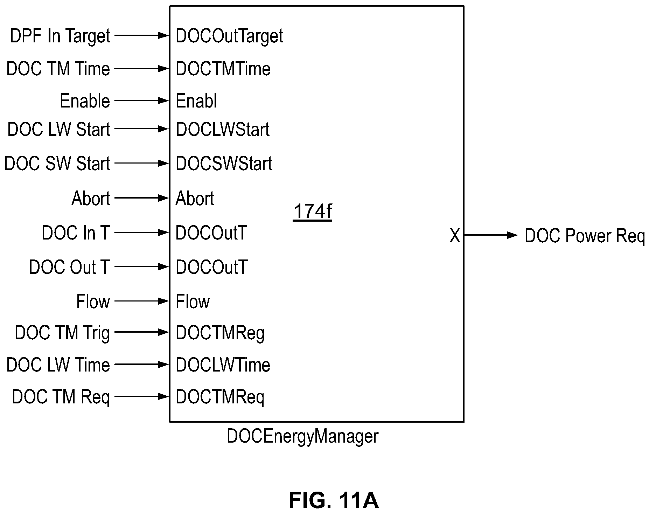

FIG. 11A is block diagram of the oxidation catalyst energy management module 174f, and FIG. 10B is another block diagram illustrating various submodules that may be included in oxidation catalyst energy management module 174f, according to an example embodiment. FIG. 11A shows various inputs and outputs of the oxidation catalyst energy management module 174f. For example, the oxidation catalyst energy management module 174f may receive information regarding the target filter inlet temperature ("DPF in target"), the estimated oxidation catalyst warm-up time ("DOC TM time"), the oxidation catalyst inlet temperature ("DOC in T"), an oxidation catalyst outlet temperature ("DOC out T"), the exhaust gas flow rate ("Flow"), the oxidation catalyst long time window start signal ("DOC LW start"), the oxidation catalyst short time window start signal ("DOC SW start"), the oxidation catalyst thermal management trigger signal ("DOC TM trig"), the oxidation catalyst long time window signal ("DOC LW time"), the oxidation catalyst thermal request signal ("DOC TM request"), the enable signal, or the abort signal. If the enable signal is true and there is no abort signal, the oxidation catalyst energy management module 174f determines the oxidation catalyst power request ("DOC pwr req"), and outputs the DOC pwr req to the AFT energy management module 174g.

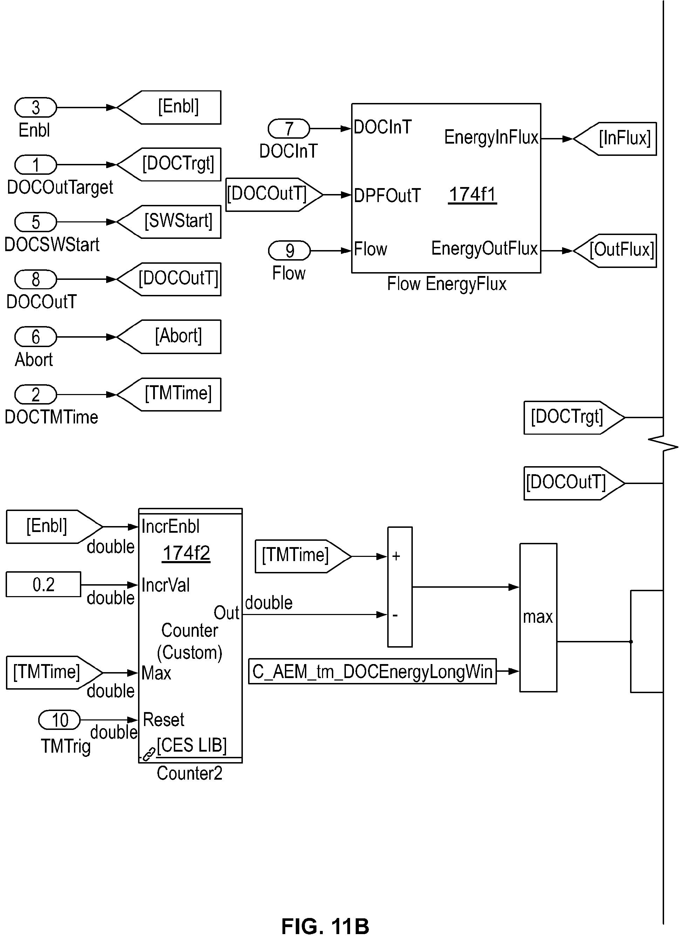

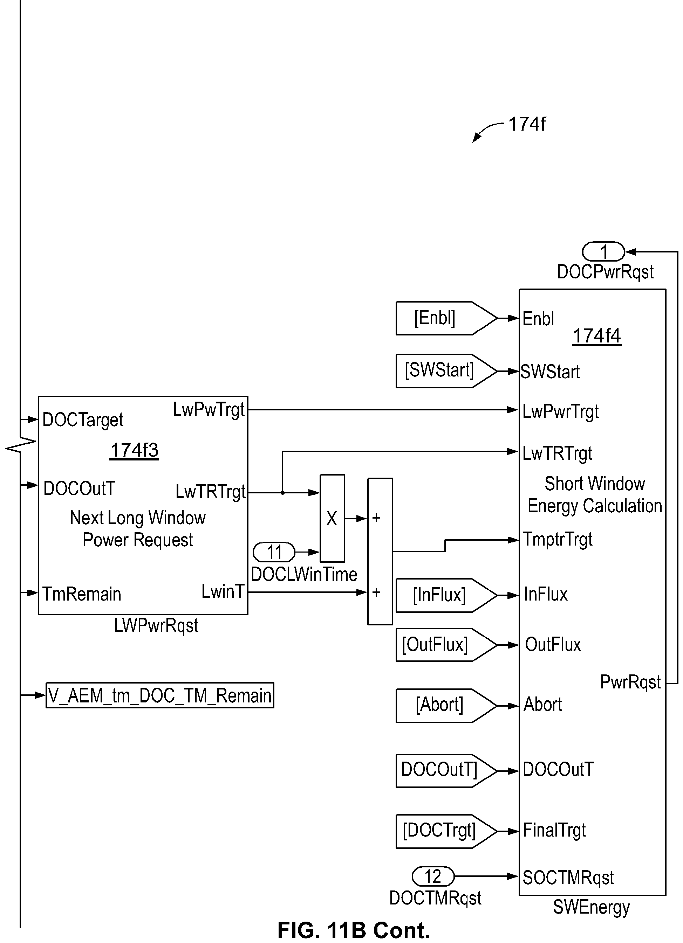

As shown in FIG. 11B, similar to the SCR energy management module 174d, the oxidation catalyst energy management module 174f may include an oxidation catalyst flow energy flux determination submodule 174f1, an oxidation catalyst counter submodule 174f2, an oxidation catalyst LW power request submodule 174f3, and an oxidation catalyst short time window energy calculation submodule 174f4. The oxidation catalyst flow energy flux determination submodule 174f1 receives the oxidation catalyst inlet temperature ("DOC in T"), the oxidation catalyst outlet temperature ("DOC out T"), and the exhaust gas flow rate ("flow"), and determines and outputs the energy influx into the exhaust gas and energy out flux (i.e., energy loss) from the exhaust gas over the oxidation catalyst 130.

The oxidation catalyst counter submodule 174f2 is configured to start a timer at the beginning of oxidation catalyst thermal management, as previously described. For example, in response to receiving an enable signal ("enable"), and an oxidation catalyst thermal management trigger signal ("TM trig"), the submodule 174f2 uses a predetermined increment value (e.g., 0.2 seconds), and the estimated oxidation catalyst warm-up time ("TM time") and runs for a length of the estimated oxidation catalyst warm-up time. The oxidation catalyst LW power request submodule 174f3 receives the oxidation catalyst target temperature ("DOC trgt"), the oxidation catalyst outlet temperature ("DOC out T"), and the larger value of a oxidation catalyst thermal management remaining time ("TM remain"), and the length of the oxidation catalyst long time window ("DPF energy long time window"). In response to receiving a long time window start signal ("DOC LW start"), the submodule 174f3 determines a target oxidation catalyst additional power for a next long time window ("LW pwr trgt"), a target oxidation catalyst temperature for the next long time window ("LW TR trgt"), and an oxidation catalyst initial temperature at the beginning of the next long time window ("LW in T") for the oxidation catalyst 130.

Moreover, the oxidation catalyst short time window energy calculation submodule 174f4 is configured to use the target additional power for the next long time window ("LW pwr trgt"), the target temperature for the next long time window ("LW TR trgt"), and a target temperature for the next short time window determined based on the initial oxidation catalyst temperature and the length of long time window ("DOC LW in time"), along with the determined energy influx, the energy out flux, current oxidation catalyst outlet temperature ("DOC out T"), target oxidation catalyst outlet temperature ("DOC trgt") to determine the oxidation catalyst power request ("DOC pwr req) for the short time window in response to an enable signal, a DOC TM request signal and a SW start signal being received, as previously described.

The AFT energy management module 174g is configured to receive the SCR power request, the filter power request, and the DOC power request. The AFT energy management module 174g determines total additional energy ("TM energy"), power, estimated warm-up time and communicates this signal to the engine 10 to perform thermal management of the SCR system 150, as previously described herein. The AFT energy management module 174g may also receive a heater power limit signal from the engine 10, for example, based on additional power available from the engine 10, which may set the amount of power available from the engine 10 for the heater 108.

The AFT energy management module 174g may also be configured to communicate a thermal management request signal ("TM mode request"), for example, to a separate aftertreatment controller to initiate thermal management. The AFT energy management module 174g may also be configured to generate a heater power request signal that may be communicated to the heater 108 (e.g., a heater controller), so as to cause activation of the heater 108. Moreover, the AFT energy management module 174g may be configured to generate a hydrocarbon power request signal configured to cause activation of the hydrocarbon insertion assembly 122 for inserting hydrocarbons into aftertreatment system 100 based on the available additional power from the engine 10.

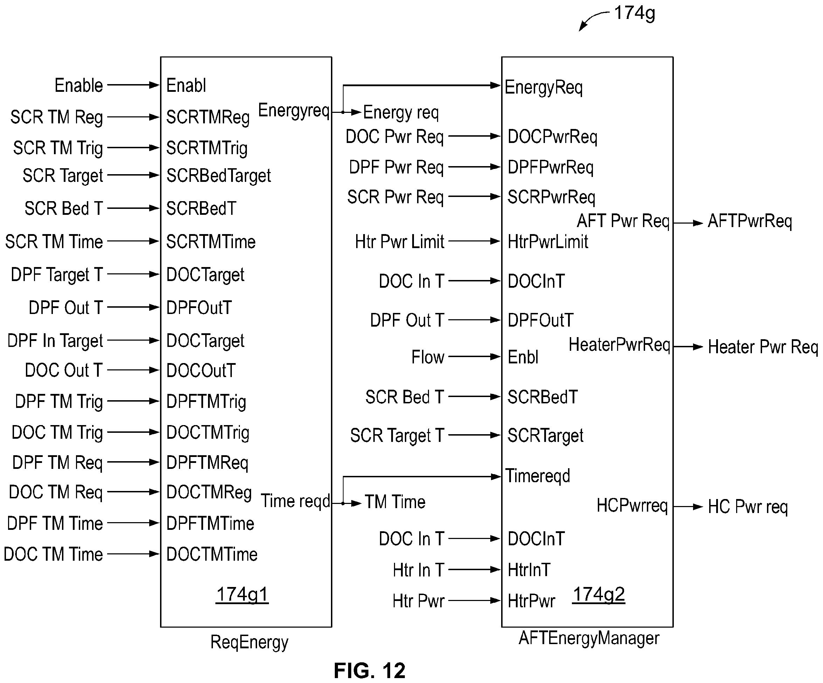

FIG. 12 is another block diagram showing submodules that maybe included in the AFT energy management module 174g, according to an example embodiment. The AFT energy management module 174g may include an energy request submodule 174g1 and a power request submodule 174g2. The energy request submodule 174g1 is configured to receive the current SCR bed temperature ("SCR bed T"), the target SCR bed temperature ("SCR bed T"), the estimated SCR warm-up time ("SCR TM time"), the target filter temperature ("DPF target T"), the filter outlet temperature ("DPF out T"), the target filter inlet temperature (DPF in target"), oxidation catalyst outlet temperature ("DOC out T"), estimated filter warm-up time ("DPF TM time"), and an estimated oxidation catalyst warm-up time ("DOC TM time").

In response to receiving an enable signal ("enable"), a SCT thermal management request signal ("SCR TM request"), a SCR thermal management trigger signal ("SCR TM trig"), a filter thermal management trigger signal ("DPF TM trig"), an oxidation catalyst thermal management trigger signal ("DOC TM trig"), a filter thermal management request signal ("DPF TM req"), and an oxidation catalyst thermal management request signal ("DOC TM req"), the energy request submodule 174g1 determines the overall energy request ("energy req") and the overall estimated warm-up time ("TM time") for the entire aftertreatment system 100, and generates signals corresponding to the overall energy request and the overall estimated warm-up time, as previously described.

The power request submodule 174g2 receives the overall energy request and the overall estimated warm-up time from the energy request submodule 174g1, the oxidation catalyst power request ("DOC pwr req"), the filter power request ("DPF pwr req"), the SCR power request ("SCR pwr req"), the heater power limit ("htr pwr limit"), the oxidation catalyst inlet temperature ("DOC in T"), the filter outlet temperature ("DPF out T"), the exhaust gas flow rate ("flow"), the current SCR bed temperature ("SCR bed T"), the target SCR temperature ("SCR target T"), the oxidation catalyst inlet temperature ("DOD in T"), the heater inlet temperature ("htr in T"), and the current heater power ("htr pwr"), and based on these parameters, generates an aftertreatment power request ("AFT pwr req") corresponding to the total additional power requested from the engine 10, a heater power request ("htr pwr req") corresponding to the power needed from the heater 108, and a hydrocarbon power request ("HC pwr req") corresponding the power needed from the oxidation catalyst 130 (e.g., the amount of hydrocarbons to be inserted into the oxidation catalyst 130 so as to generate a desired amount of energy).

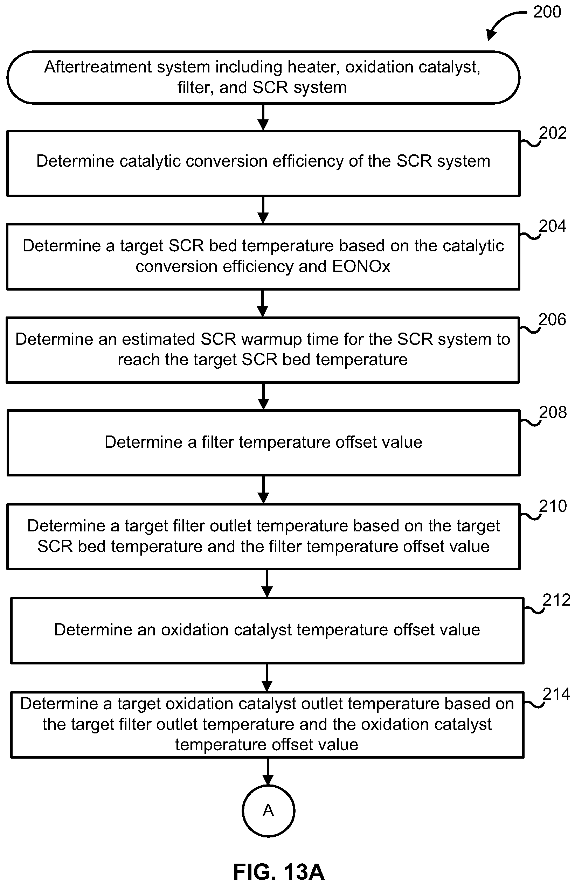

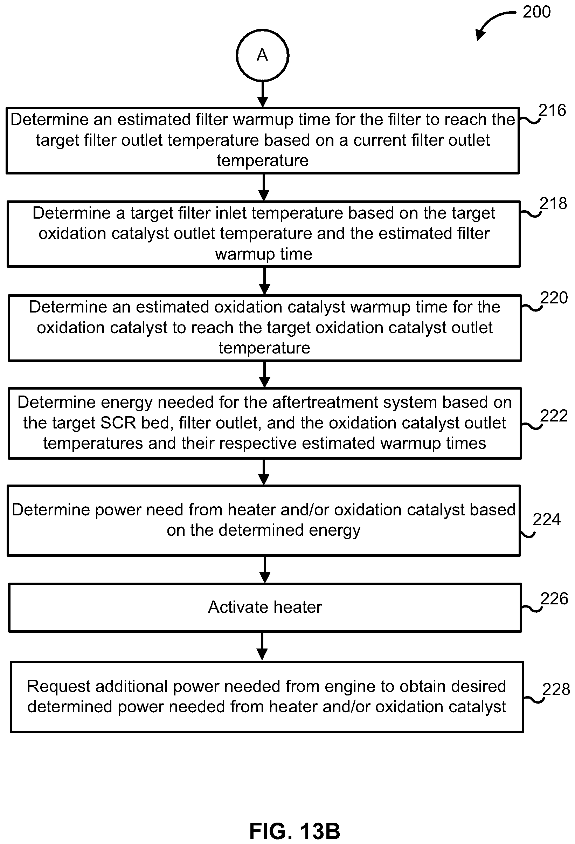

FIGS. 13A-13B are schematic flow charts of an example method 200 for thermal management of an aftertreatment system (e.g., the aftertreatment system 100, according to an embodiment. While described with reference to the controller 170, the heater 108, the oxidation catalyst 130, the filter 140, and the SCR system 150 of the aftertreatment system 100, the operations of the method 200 can be used with any controller included in any aftertreatment system.

The method 200 may include determining, by a controller (e.g., the controller 170), an energy needed to warm up the aftertreatment component (e.g., the oxidation catalyst 130, the filter 140, and/or the SCR system 150), to a target temperature within an estimated warm-up time. The method 200 also includes determining, by the controller, a heater power needed from the heater (e.g., the heater 108) for warming up the at least one component to the target temperature within the estimated warm-up time based on the determined energy. The method 200 also includes initiating, by the controller, thermal management so as cause activation of the heater.

The method 200 also includes determining, by the controller, an additional power needed from the engine (e.g., the engine 10) for powering the heater based on a current power being generated by the engine, the heater power, the target temperature, and the estimated warm-up time. The method 200 also includes transmitting, by the controller, a signal to the engine to request the additional power from the engine. In some embodiments, the method 200 may also include adjusting, by the controller, the additional power requested from the engine based on a power limit of the heater, a current temperature of the aftertreatment component, the target temperature, and the estimated warm-up time period.

For example, as shown in FIGS. 13A-13B, the method 200 may include determining, by the controller 170, the catalytic conversion efficiency of the SCR system 150 and the $EONO_X$ amount, at 202. At 204, the controller 170 determines the target SCR bed temperature based on the determined catalytic conversion efficiency of the SCR system 150 and the EONOx amount, as previously described. At 206, the controller 170 determines an estimated time period for the SCR system to reach the target SCR bed temperature, as previously described.

At 208, the controller 170 determines a filter temperature offset value. For example, in response to the current SCR bed temperature being less than the target SCR bed temperature, the controller is configured to determine the filter temperature offset value being based on: (1) an ambient temperature, and (2) temperature loss due to insertion of a reductant into the exhaust gas, as previously described. On the other hand, in response to the current SCR bed temperature being equal to or greater than the target SCR bed temperature, the controller 170 determines the filter temperature offset value being based an average positive difference between the current filter outlet temperature and the current SCR bed temperature over a time period. At 210, the controller determines the target filter outlet temperature based on the target SCR bed temperature and the filter temperature offset value, as previously described.

At 212, the controller determines an oxidation catalyst temperature offset value. For example, in response to the current filter outlet temperature being less than the target filter outlet temperature, the controller 170 determines the oxidation catalyst temperature offset value based on the ambient temperature and a current filter bed temperature of the filter 140, as previously described. On the other hand, in response to the current filter outlet temperature being equal to or greater than the target filter outlet temperature, the controller 170 determines the oxidation catalyst temperature offset value as an average positive difference between the current oxidation catalyst outlet temperature and the current filter outlet temperature over a time period. At 214, the controller 170 determines the target oxidation catalyst outlet temperature based on target filter outlet temperature and the oxidation catalyst temperature offset value.

At 216, the controller 170 determines an estimated filter warm-up time for the filter to reach the target filter outlet temperature based on the current filter outlet temperature, as previously described. At 218, the controller 170 determines a target filter inlet temperature based on the target oxidation catalyst outlet temperature and the estimate filter warm-up time, as previously described. At 220, the controller 170 determines energy needed for heating the aftertreatment system 100 based on the target SCR bed temperature and the SCR estimated warm-up time, the target filter temperature and the estimated filter warm-up time, and the target oxidation catalyst temperature and the oxidation catalyst warm-up time.

At 222, the controller 170 determines power needed from the heater 108 and/or the oxidation catalyst 130 based on the determined energy, as previously described. At 224, the controller 170 initiates thermal management by causing activation of the heater 108. At 226, the controller 170 transmits a signal to the engine 10 requesting additional power form the engine 10 to obtain desired power needed from the heater 108 and/or the oxidation catalyst 130.

In some embodiments, the method 200 may also include starting, by the controller 170, a timer simultaneously with initiating the thermal management. In response to the timer reaching the estimated SCR warm-up time and the current SCR bed temperature still being below the target SCR bed temperature, the controller 170 determines a new estimated SCR warm-up time based on the current SCR bed temperature and the target SCR bed temperature. The controller 170 resets and restarts the timer, and generates a signal to adjust the additional power requested from the engine 10 based on the new estimated SCR warm-up time, the current SCR bed temperature, and the target SCR bed temperature. The controller 170 may similarly recalculate new estimated filter warm-up times and new estimated oxidation catalyst warm-up times, and generate new signals to adjust additional power request from the engine 10 for these components similar to the SCR system 150, as previously described.

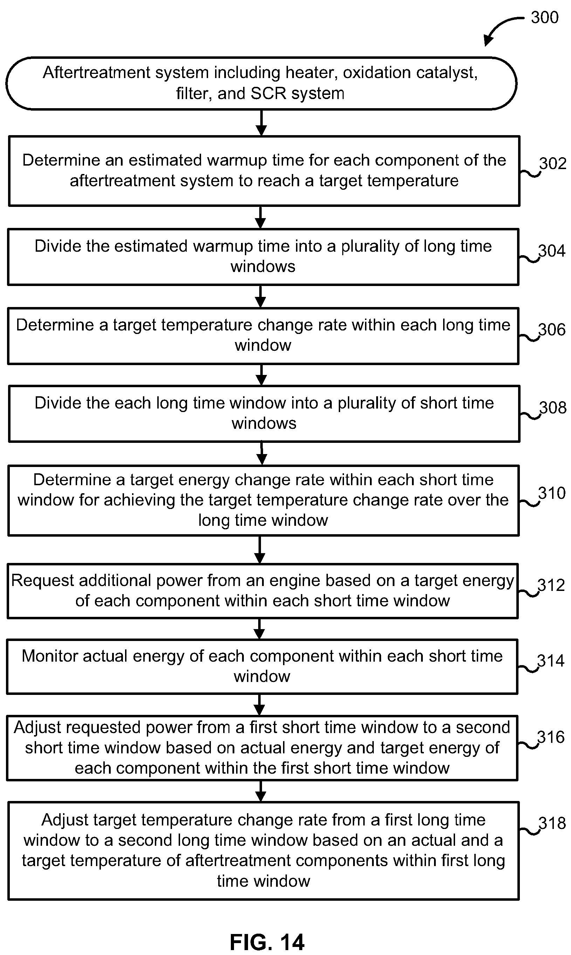

FIG. 14 is a schematic flow diagram of a method 300 for thermal management of an aftertreatment system (e.g., an aftertreatment system 100), according to an embodiment. The method 200 may be used in conjunction with, or independently of the method 200. While described with reference to the controller 170, the heater 108, the oxidation catalyst 130, the filter 140, and the SCR system 150 of the aftertreatment system 100, the operations of the method 300 can be used with any controller included in any aftertreatment system.

The method 300 includes determining, by the controller 170, an estimated warm-up time for each component of the aftertreatment system 100 (e.g., the oxidation catalyst 130, the filter 140, and the SCR system 150) to reach its target temperature, at 302, as previously described. At 304, the controller 170 divides each of the estimated warm-up times into plurality of long time windows, as previously described. At 306, the controller 170 determines a target temperature change rate within each long time window based on an initial aftertreatment component temperature when thermal management was started, the target aftertreatment component temperature, and a thermal management remaining time. The thermal management remaining time is a difference between the estimated aftertreatment component warm-up time and an elapsed time since thermal management started, as previously described.

At 308, the controller 170 divides each long time window into a plurality of short time windows. At 310, the controller 170 determines a target energy change rate within each short time window for achieving the target temperature change rate over the long time window, as previously described. At 312, the controller 170 transmits a signal the engine 10 to request additional power for powering the heater 108 and/or causing insertion of hydrocarbons into the oxidation catalyst 130, as previously described. The controller 170 may also initiate thermal management and cause activation of the heater 108.

The method 300 may also include adjusting, by the controller 170, the additional power requested from the engine based on a target energy of the aftertreatment component within each short time window. For example, at 314, the controller 170 monitors the actual energy of each aftertreatment component within each short time window. At 316, the controller 170 adjusts the requested additional power from the engine 10 from a first short time window to a second short time window based on actual energy and target energy of each component within the first short time window. At 318, the controller 170 adjusts a target temperature change rate from a first long time window to a second long time window based on an actual and a target temperature of aftertreatment components within the first long time window.

The term "coupled" and the like as used herein mean the joining of two members directly or indirectly to one another. Such joining may be stationary (e.g., permanent) or moveable (e.g., removable or releasable). Such joining may be achieved with the two members or the two members and any additional intermediate members being integrally formed as a single unitary body with one another or with the two members or the two members and any additional intermediate members being attached to one another.

It is important to note that the construction and arrangement of the various exemplary embodiments are illustrative only. Although only a few embodiments have been described in detail in this disclosure, those skilled in the art who review this disclosure will readily appreciate that many modifications are possible (e.g., variations in sizes, dimensions, structures, shapes and proportions of the various elements; values of parameters, mounting arrangements; use of materials, colors, orientations, etc.) without materially departing from the novel teachings and advantages of the subject matter described herein. Additionally, it should be understood that features from one embodiment disclosed herein may be combined with features of other embodiments disclosed herein as one of ordinary skill in the art would understand. Other substitutions, modifications, changes, and omissions may also be made in the design, operating conditions, and arrangement of the various exemplary embodiments without departing from the scope of the present embodiments.

While this specification contains many specific implementation details, these should not be construed as limitations on the scope of any embodiments or of what may be claimed, but rather as descriptions of features specific to particular implementations of particular embodiments. Certain features described in this specification in the context of separate implementations can also be implemented in combination in a single implementation.

**Claims**

1. A controller (170) for thermal management of an aftertreatment system (100) that comprises a heater (108) and an aftertreatment component (130, 140, 150) downstream of the heater (108), the aftertreatment system (100) being coupled to an engine (10) that generates an exhaust gas, the controller (170) configured to:

   determine an estimated warm-up time for warming up the aftertreatment component (130, 140, 150) to a target temperature via the heater (108); and
   activate the heater (108);
   **characterized in that** the controller (170) is further configured to:

   divide the estimated warm-up time into a plurality of long time windows;
   determine a target temperature change rate within each long time window;
   divide at least one long time window of the plurality of long time windows into a plurality of short time windows;
   determine a target energy change rate within each short time window for achieving the target temperature change rate over the at least one long time window;
   determine an additional power needed from the engine (10) for powering the heater (108) based on a target energy of the aftertreatment component (130, 140, 150) within each short time window; and
   transmit a signal to the engine (10) to request the additional power needed from the engine (10).

2. The controller of claim 1, wherein:
   the target temperature change rate within each long time window is determined based on an initial temperature of the aftertreatment component at a start of the long time window, the target temperature, and the estimated warm-up time.

3. The controller of claim 1, further configured to:

   monitor an actual energy of the aftertreatment component within each short time window;
   adjust the additional power requested from the engine from a first short time window to a second short time window based on the actual energy and the target energy of the aftertreatment component within the first short time window; and
   adjust the target temperature change rate from a first long time window to a second long time window based on an actual temperature and the target temperature of the aftertreatment component within the first long time window.

4. The controller of claim 1 or 2, further configured to:
   adjust the additional power requested from the engine based on a power limit of the heater, a current temperature of the aftertreatment component, the target temperature, and the estimated warm-up time.

5. The controller of claim 1 or 2, wherein:

   the aftertreatment component comprises a selective catalytic reduction (SCR) system;
   the target temperature comprises a target SCR bed temperature of the SCR system; and
   the controller is further configured to:

   determine a catalytic conversion efficiency of the SCR system and an engine out $NO_X$ amount of $NO_X$ gases included in the exhaust gas, and
   determine the target SCR bed temperature based on the catalytic conversion efficiency of the SCR system and the engine out $NO_X$ amount.

6. The controller of claim 5, wherein:

   the estimated warm-up time is an estimated SCR warm-up time for warming up the SCR system to the target SCR bed temperature; and
   the controller is further configured to:

   determine the estimated SCR warm-up time based on a current SCR bed temperature of the SCR system and the target SCR bed temperature,
   start a timer simultaneously with initiating the thermal management,
   in response to the timer reaching the estimated SCR warm-up time and the current SCR bed temperature still being below the target SCR bed temperature, determine a new estimated SCR warm-up time based on the current SCR bed temperature and the target SCR bed temperature,
reset and restart the timer, and
adjust the additional power requested from the engine based on the new estimated SCR warm-up time, the current SCR bed temperature, and the target SCR bed temperature.

7. The controller of claim 1, wherein:

the aftertreatment component comprises a filter disposed downstream of the heater and a SCR system disposed downstream of the filter;
the estimated warm-up time is an estimated SCR warm-up time for warming up the SCR system to a target SCR bed temperature; and
the controller is further configured to:

determine the estimated SCR warm-up time based on a current SCR bed temperature of the SCR system and the target SCR bed temperature,
determine an estimated filter warm-up time for warming up the filter based on a target filter outlet temperature and a current filter outlet temperature, and
adjust the additional power requested from the engine based on the estimated SCR warm-up time, the target SCR bed temperature, the estimated filter warm-up time, and the target filter outlet temperature.

8. The controller of claim 7, further configured to:
in response to the current SCR bed temperature being less than the target SCR bed temperature, determine the target filter outlet temperature based on the target SCR bed temperature and a filter temperature offset value, the filter temperature offset value being based on: (1) an ambient temperature, and (2) temperature loss due to insertion of a reductant into the exhaust gas.

9. The controller of claim 7 or 8, further configured to:
in response to the current SCR bed temperature being equal to or greater than the target SCR bed temperature, determine the target filter outlet temperature based on the target SCR bed temperature and a filter temperature offset value, the filter temperature offset value being based an average positive difference between the current filter outlet temperature and the current SCR bed temperature over a time period.

10. The controller of any of claims 7-9, wherein:

the aftertreatment component also comprises a oxidation catalyst disposed downstream of the heater and upstream of the filter; and
the controller is further configured to:

determine an estimated filter warm-up time for the filter to reach a target filter outlet temperature based on a target oxidation catalyst outlet temperature and a current oxidation catalyst outlet temperature, and
adjust the additional power requested from the engine based also on the estimated filter warm-up time and the target filter outlet temperature.

11. The controller of claim 10, further configured to:
in response to the current filter outlet temperature being less than the target filter outlet temperature, determine the target oxidation catalyst outlet temperature based on the target filter outlet temperature and an oxidation catalyst temperature offset value, the oxidation catalyst temperature offset value being based on an ambient temperature and a current filter bed temperature of the filter.

12. The controller of claim 10 or 11, further configured to:
in response to the current filter outlet temperature being equal to or greater than the target filter outlet temperature, determine the target oxidation catalyst outlet temperature based on the target filter outlet temperature and an oxidation catalyst temperature offset value, the oxidation catalyst temperature offset value being an average positive difference between the current oxidation catalyst outlet temperature and the current filter outlet temperature over a time period.

13. The controller of any preceding claim, wherein:

the aftertreatment component comprises an oxidation catalyst disposed downstream of the heater, a filter disposed downstream of the oxidation catalyst, and a SCR system disposed downstream of the filter; and the controller is configured to:

determine a SCR warm-up energy, a filter warm-up energy, and an oxidation catalyst warm-up energy for the SCR system, the filter, and the oxidation catalyst, respectively to reach their target temperatures, and determine the additional power needed from the engine based on the determined SCR warm-up energy, the determined filter warm-up energy, and the determined oxidation catalyst warm-up energy.

**14.** The controller of claim 13, further configured to:

determine an average warm-up power based on a sum of the determined SCR warm-up energy, the determined filter warm-up energy, and the determined oxidation catalyst warm-up energy over the estimated warm-up time; determine a sum power needed from the engine by adding a power needed by each of the oxidation catalyst, the filter, and the SCR system from the engine based on the determined SCR warm-up energy, the determined filter warm-up energy, and the determined oxidation catalyst warm-up energy, respectively; in response to the determined sum power being zero or lower than the determined average warm-up power and a current SCR bed temperature of the SCR system being less than a target SCR bed temperature, request the sum power as the additional power from the engine; and at least one of: (1) request power from the heater based on the average warm-up power; and (2) cause insertion of hydrocarbons into the oxidation catalyst to obtain power from the oxidation catalyst based on the average warm-up power.

**15.** The controller of any preceding claim, further configured to:

in response to determining that a flow rate of the exhaust gas is below a threshold, determine an estimated heater temperature; and determine a heater power limit based on the estimated heater temperature so as to deactivate the heater when a power of the heater reaches the heater power limit.

**16.** The controller of any preceding claim, further configured to:
adjust a heater power limit of the heater based on changes in the estimated heater temperature.

**17.** A method (300) for thermal management of an aftertreatment system (100) with a controller (170) according to claim 1, the aftertreatment system (100) comprising a heater (108) and an aftertreatment component (130, 140, 150) disposed downstream of the heater (108), the aftertreatment system (100) being coupled to an engine (10) that generates an exhaust gas, the method (300) comprising:

determining, by a controller (170), an estimated warm-up time for warming up the aftertreatment component (130, 140, 150) to a target temperature via the heater (108); activating, by the controller (170), the heater (108); **characterized in that** the method further comprises:

dividing, by the controller (170), the estimated warm-up time into a plurality of long time windows; determining, by the controller (170), a target temperature change rate within each long time window; dividing, by the controller (170), at least one long time window of the plurality of long time windows into a plurality of short time windows; determining, by the controller (170), a target energy change rate within each short time window for achieving the target temperature change rate over the at least one long time window; determining, by the controller (170), an additional power needed from the engine (10) for powering the heater (108) based on a target energy of the aftertreatment component (130, 140, 150) within each short time window; and transmitting, by the controller (170), a signal to the engine (10) to request the additional power needed from the engine (10).

**18.** The method of claim 17, wherein:
determining the target temperature change rate within each long time window is based on an initial temperature of the aftertreatment component at a start of the long time window, the target temperature, and the estimated warm-up time.

**19.** The method of claim 17, further comprising:

monitoring, by the controller, an actual energy of the aftertreatment component within each short time window;
adjusting, by the controller, the additional power requested from the engine from a first short time window to a second short time window based on the actual energy and the target energy of the aftertreatment component within the first short time window; and
adjusting, by the controller, the target temperature change rate from a first long time window to a second long time window based on an actual temperature and the target temperature of the aftertreatment component within the first long time window.

**20.** The method of claim 17 or 18, further comprising:
adjusting, by the controller, the additional power requested from the engine based on a power limit of the heater, a current temperature of the aftertreatment component, the target temperature, and the estimated warm-up time.

**Patentansprüche**

**1.** Steuereinheit (170) für Thermomanagement eines Nachbehandlungssystems (100), das eine Heizung (108) und eine Nachbehandlungskomponente (130, 140, 150) stromabwärts von der Heizung (108) umfasst, wobei das Nachbehandlungssystem (100) mit einem Motor (10) gekoppelt ist, der ein Abgas erzeugt, wobei die Steuereinheit (170) zu Folgendem konfiguriert ist:

Bestimmen einer geschätzten Aufwärmzeit zum Aufwärmen der Nachbehandlungskomponente (130, 140, 150) auf eine Zieltemperatur über die Heizung (108); und
Aktivieren der Heizung (108);
**dadurch gekennzeichnet, dass** die Steuereinheit (170) weiter konfiguriert ist zum:

Teilen der geschätzten Aufwärmzeit in eine Vielzahl von langen Zeitfenstern;
Bestimmen einer Änderungsrate der Zieltemperatur innerhalb jedes langen Zeitfensters;
Teilen von mindestens einem langen Zeitfenster der Vielzahl von langen Zeitfenstern in eine Vielzahl von kurzen Zeitfenstern;
Bestimmen einer Änderungsrate der Zielenergie innerhalb jedes kurzen Zeitfensters zum Erreichen der Änderungsrate der Zieltemperatur über das mindestens eine lange Zeitfenster;
Bestimmen einer zusätzlichen Leistung, die vom Motor (10) benötigt wird, um die Heizung (108) basierend auf einer Zielenergie der Nachbehandlungskomponente (130, 140, 150) innerhalb jedes kurzen Zeitfensters zu betreiben; und
Übertragen eines Signals an den Motor (10), um die zusätzliche Leistung anzufordern, die vom Motor (10) benötigt wird.

**2.** Steuereinheit nach Anspruch 1, wobei:
die Änderungsrate der Zieltemperatur innerhalb jedes langen Zeitfensters basierend auf einer anfänglichen Temperatur der Nachbehandlungskomponente bei einem Beginn des langen Zeitfensters, der Zieltemperatur und der geschätzten Aufwärmzeit bestimmt wird.

**3.** Steuereinheit nach Anspruch 1, die weiter konfiguriert ist zum:

Überwachen einer tatsächlichen Energie der Nachbehandlungskomponente innerhalb jedes kurzen Zeitfensters;
Anpassen der vom Motor angeforderten zusätzlichen Leistung von einem ersten kurzen Zeitfenster zu einem zweiten kurzen Zeitfenster basierend auf der tatsächlichen Energie und der Zielenergie der Nachbehandlungskomponente innerhalb des ersten kurzen Zeitfensters; und
Anpassen der Änderungsrate der Zieltemperatur von einem ersten langen Zeitfenster zu einem zweiten langen Zeitfenster basierend auf einer tatsächlichen Temperatur und der Zieltemperatur der Nachbehandlungskomponente innerhalb des ersten langen Zeitfensters.

**4.** Steuereinheit nach Anspruch 1 oder 2, die weiter konfiguriert ist zum:
Anpassen der vom Motor angeforderten zusätzlichen Leistung basierend auf einer Leistungsgrenze der Heizung, einer aktuellen Temperatur der Nachbehandlungskomponente, der Zieltemperatur und der geschätzten Aufwärmzeit.

5. Steuereinheit nach Anspruch 1 oder 2, wobei:

die Nachbehandlungskomponente ein System zur selektiven katalytischen Reduktion (SCR) umfasst; die Zieltemperatur eine SCR-Bett-Zieltemperatur des SCR-Systems umfasst; und die Steuereinheit weiter konfiguriert ist zum:

Bestimmen einer katalytischen Umwandlungseffizienz des SCR-Systems und einer Menge von $NO_X$-Motorausgabe von $NO_X$-Gasen, die im Abgas eingeschlossen sind, und
Bestimmen der SCR-Bett-Zieltemperatur basierend auf der katalytischen Umwandlungseffizienz des SCR-Systems und der Menge der $NO_X$-Motorausgabe.

6. Steuereinheit nach Anspruch 5, wobei:

die geschätzte Aufwärmzeit eine geschätzte SCR-Aufwärmzeit zum Aufwärmen des SCR-Systems auf die SCR-Bett-Zieltemperatur ist; und
die Steuereinheit weiter konfiguriert ist zum:

Bestimmen der geschätzten SCR-Aufwärmzeit basierend auf einer aktuellen SCR-Bett-Temperatur des SCR-Systems und der SCR-Bett-Zieltemperatur,
Starten eines Timers gleichzeitig mit der Initialisierung des Thermomanagements,
als Reaktion darauf, dass der Timer die geschätzte SCR-Aufwärmzeit erreicht und die aktuelle SCR-Bett-Temperatur immer noch unter der SCR-Bett-Zieltemperatur liegt, Bestimmen einer neuen geschätzten SCR-Aufwärmzeit basierend auf der aktuellen SCR-Bett-Temperatur und der SCR-Bett-Zieltemperatur,
Zurücksetzen und Neustarten des Timers, und
Anpassen der vom Motor angeforderten zusätzlichen Leistung basierend auf der neuen geschätzten SCR-Aufwärmzeit, der aktuellen SCR-Bett-Temperatur und der SCR-Bett-Zieltemperatur.

7. Steuereinheit nach Anspruch 1, wobei:

die Nachbehandlungskomponente einen Filter umfasst, der stromabwärts von der Heizung angeordnet ist, und ein SCR-System, das stromabwärts vom Filter angeordnet ist;
die geschätzte Aufwärmzeit eine geschätzte SCR-Aufwärmzeit zum Aufwärmen des SCR-Systems auf die SCR-Bett-Zieltemperatur ist; und
die Steuereinheit weiter konfiguriert ist zum:

Bestimmen der geschätzten SCR-Aufwärmzeit basierend auf einer aktuellen SCR-Bett-Temperatur des SCR-Systems und der SCR-Bett-Zieltemperatur,
Bestimmen einer geschätzten Filter-Aufwärmzeit zum Aufwärmen des Filters basierend auf einer Zieltemperatur am Filterauslass und einer aktuellen Temperatur am Filterauslass, und
Anpassen der vom Motor angeforderten zusätzlichen Leistung basierend auf der geschätzten SCR-Aufwärmzeit, der SCR-Bett-Zieltemperatur, der geschätzten Filter-Aufwärmzeit und der Zieltemperatur am Filterauslass.

8. Steuereinheit nach Anspruch 7, die weiter konfiguriert ist zum:
als Reaktion darauf, dass die aktuelle SCR-Bett-Temperatur weniger ist als die SCR-Bett-Zieltemperatur, Bestimmen der Zieltemperatur am Filterauslass basierend auf der SCR-Bett-Zieltemperatur und einem Verschiebungswert der Filtertemperatur, wobei der Verschiebungswert der Filtertemperatur auf Folgendem basiert: (1) einer Umgebungstemperatur und (2) Temperaturverlust infolge der Beigabe eines Reduktionsmittels zum Abgas.

9. Steuereinheit nach Anspruch 7 oder 8, die weiter konfiguriert ist zum:
als Reaktion darauf, dass die aktuelle SCR-Bett-Temperatur gleich oder größer ist als die SCR-Bett-Zieltemperatur, Bestimmen der Zieltemperatur am Filterauslass basierend auf der SCR-Bett-Zieltemperatur und einem Verschiebungswert der Filtertemperatur, wobei der Verschiebungswert der Filtertemperatur auf einer durchschnittlichen positiven Differenz zwischen der aktuellen Temperatur am Filterauslass und der aktuellen SCR-Bett-Temperatur über eine Zeitspanne basiert.

**10.** Steuereinheit nach einem der Ansprüche 7-9, wobei:

die Nachbehandlungskomponente weiter einen Oxidationskatalysator umfasst, der stromabwärts von der Heizung und stromaufwärts vom Filter angeordnet ist; und
die Steuereinheit weiter konfiguriert ist zum:

Bestimmen einer geschätzten Filter-Aufwärmzeit, damit der Filter eine Zieltemperatur am Filterauslass erreicht, basierend auf einer Zieltemperatur am Auslass des Oxidationskatalysators und einer aktuellen Temperatur am Auslass des Oxidationskatalysators, und
Anpassen der vom Motor angeforderten zusätzlichen Leistung weiter basierend auf der geschätzten Filter-Aufwärmzeit und der Zieltemperatur am Filterauslass.

**11.** Steuereinheit nach Anspruch 10, die weiter konfiguriert ist zum:
als Reaktion darauf, dass die aktuelle Temperatur am Filterauslass weniger ist als die Zieltemperatur am Filterauslass, Bestimmen der Zieltemperatur am Auslass des Oxidationskatalysators basierend auf der Zieltemperatur am Filterauslass und einem Verschiebungswert der Oxidationskatalysatortemperatur, wobei der Verschiebungswert der Oxidationskatalysatortemperatur auf einer Umgebungstemperatur und einer aktuellen Filterbetttemperatur des Filters basiert.

**12.** Steuereinheit nach Anspruch 10 oder 11, die weiter konfiguriert ist zum:
als Reaktion darauf, dass die aktuelle Temperatur am Filterauslass gleich groß oder größer ist als die Zieltemperatur am Filterauslass, Bestimmen der Zieltemperatur am Auslass des Oxidationskatalysators basierend auf der Zieltemperatur am Filterauslass und einem Verschiebungswert der Oxidationskatalysatortemperatur, wobei der Verschiebungswert der Oxidationskatalysatortemperatur eine durchschnittliche positive Differenz zwischen der aktuellen Temperatur am Auslass des Oxidationskatalysators und der aktuellen Temperatur am Filterauslass über eine Zeitspanne ist.

**13.** Steuereinheit nach einem vorstehenden Anspruch, wobei:

die Nachbehandlungskomponente einen Oxidationskatalysator umfasst, der stromabwärts von der Heizung angeordnet ist, einen Filter, der stromabwärts vom Oxidationskatalysator angeordnet ist und ein SCR-System, das stromabwärts vom Filter angeordnet ist; und
die Steuereinheit konfiguriert ist zum:

Bestimmen einer SCR-Aufwärmenergie, einer Filter-Aufwärmenergie und einer Oxidationskatalysator-Aufwärmenergie für das SCR-System bzw. den Filter und den Oxidationskatalysator, um ihre Zieltemperaturen zu erreichen, und
Bestimmen der zusätzlichen Leistung, die vom Motor benötigt wird, basierend auf der bestimmten SCR-Aufwärmenergie, der bestimmten Filter-Aufwärmenergie und der bestimmten Oxidationskatalysator-Aufwärmenergie.

**14.** Steuereinheit nach Anspruch 13, die weiter konfiguriert ist zum:

Bestimmen einer durchschnittlichen Aufwärmleistung basierend auf einer Summe der bestimmten SCR-Aufwärmenergie, der bestimmten Filter-Aufwärmenergie und der bestimmten Oxidationskatalysator-Aufwärmenergie über die geschätzte Aufwärmzeit;
Bestimmen einer Summenleistung, die vom Motor benötigt wird, durch Addieren einer Leistung, die von jedem des Oxidationskatalysators, des Filters und des SCR-Systems vom Motor benötigt wird, basierend auf der bestimmten SCR-Aufwärmenergie bzw. der bestimmten Filter-Aufwärmenergie und der bestimmten Oxidationskatalysator-Aufwärmenergie;
als Reaktion darauf, dass die bestimmte Summenleistung null oder weniger als die bestimmte durchschnittliche Aufwärmleistung ist und eine aktuelle SCR-Bett-Temperatur des SCR-Systems weniger als eine SCR-Bett-Zieltemperatur ist, Anfordern der Summenleistung als die zusätzliche Leistung vom Motor; und
mindestens eines von: (1) Anfordern von Leistung von der Heizung basierend auf der durchschnittlichen Aufwärmleistung; und (2) Bewirken, dass Kohlenwasserstoffe in den Oxidationskatalysator eingeführt werden, um vom Oxidationskatalysator Leistung basierend auf der durchschnittlichen Aufwärmleistung zu erhalten.

**15.** Steuereinheit nach einem vorstehenden Anspruch, die weiter konfiguriert ist zum:

als Reaktion auf Bestimmen, dass eine Strömungsgeschwindigkeit des Abgases unter einem Schwellenwert liegt, Bestimmen einer geschätzten Temperatur der Heizung; und

Bestimmen einer Leistungsgrenze der Heizung basierend auf der geschätzten Temperatur der Heizung, so dass die Heizung deaktiviert wird, wenn eine Leistung der Heizung die Leistungsgrenze der Heizung erreicht.

16. Steuereinheit nach einem vorstehenden Anspruch, die weiter konfiguriert ist zum:
Anpassen einer Leistungsgrenze der Heizung basierend auf Änderungen der geschätzten Temperatur der Heizung.

17. Verfahren (300) für Thermomanagement eines Nachbehandlungssystems (100) mit einer Steuereinheit (170) nach Anspruch 1, wobei das Nachbehandlungssystems (100) eine Heizung (108) und eine Nachbehandlungskomponente (130, 140, 150), die stromabwärts von der Heizung (108) angeordnet ist, umfasst, wobei das Nachbehandlungssystem (100) mit einem Motor (10) gekoppelt ist, der ein Abgas erzeugt, wobei das Verfahren (300) Folgendes umfasst:

Bestimmen, durch eine Steuereinheit (170), einer geschätzten Aufwärmzeit zum Aufwärmen der Nachbehandlungskomponente (130, 140, 150) auf eine Zieltemperatur über die Heizung (108);
Aktivieren der Heizung (108) durch die Steuereinheit (170);
**dadurch gekennzeichnet, dass** das Verfahren weiter Folgendes umfasst:

Teilen der geschätzten Aufwärmzeit durch die Steuereinheit (170) in eine Vielzahl von langen Zeitfenstern;
Bestimmen, durch die Steuereinheit (170), einer Änderungsrate der Zieltemperatur innerhalb jedes langen Zeitfensters;
Teilen von mindestens einem langen Zeitfenster der Vielzahl von langen Zeitfenstern durch die Steuereinheit (170) in eine Vielzahl von kurzen Zeitfenstern;
Bestimmen, durch die Steuereinheit (170), einer Änderungsrate der Zielenergie innerhalb jedes kurzen Zeitfensters zum Erreichen der Änderungsrate der Zieltemperatur über das mindestens eine lange Zeitfenster;
Bestimmen, durch die Steuereinheit (170), einer zusätzlichen Leistung, die vom Motor (10) benötigt wird zum Betreiben der Heizung (108) basierend auf einer Zielenergie der Nachbehandlungskomponente (130, 140, 150) innerhalb jedes kurzen Zeitfensters; und
Übertragen, durch die Steuereinheit (170), eines Signals an den Motor (10), um die zusätzliche Leistung anzufordern, die vom Motor (10) benötigt wird.

18. Verfahren nach Anspruch 17, wobei:
Bestimmen der Änderungsrate der Zieltemperatur innerhalb jedes langen Zeitfensters auf einer anfänglichen Temperatur der Nachbehandlungskomponente bei einem Beginn des langen Zeitfensters, der Zieltemperatur und der geschätzten Aufwärmzeit basiert.

19. Verfahren nach Anspruch 17, weiter umfassend:

Überwachen, durch die Steuereinheit, einer tatsächlichen Energie der Nachbehandlungskomponente innerhalb jedes kurzen Zeitfensters;
Anpassen, durch die Steuereinheit, der vom Motor angeforderten zusätzlichen Leistung von einem ersten kurzen Zeitfenster zu einem zweiten kurzen Zeitfenster basierend auf der tatsächlichen Energie und der Zielenergie der Nachbehandlungskomponente innerhalb des ersten kurzen Zeitfensters; und
Anpassen, durch die Steuereinheit, der Änderungsrate der Zieltemperatur von einem ersten langen Zeitfenster zu einem zweiten langen Zeitfenster basierend auf einer tatsächlichen Temperatur und der Zieltemperatur der Nachbehandlungskomponente innerhalb des ersten langen Zeitfensters.

20. Verfahren nach Anspruch 17 oder 18, weiter umfassend:
Anpassen, durch die Steuereinheit, der vom Motor angeforderten zusätzlichen Leistung basierend auf einer Leistungsgrenze der Heizung, einer aktuellen Temperatur der Nachbehandlungskomponente, der Zieltemperatur und der geschätzten Aufwärmzeit.

**Revendications**

1. Dispositif de commande (170) pour une gestion thermique d'un système de post-traitement (100) qui comprend un élément chauffant (108) et un composant de post-traitement (130, 140, 150) en aval de l'élément chauffant (108), le système de post-traitement (100) étant couplé à un moteur (10) qui génère un gaz d'échappement, le dispositif de commande (170) étant configuré pour :

déterminer un temps de chauffage estimé pour chauffer le composant de post-traitement (130, 140, 150) jusqu'à une température cible par l'intermédiaire de l'élément chauffant (108) ; et
activer l'élément chauffant (108) ;
**caractérisé en ce que** le dispositif de commande (170) est en outre configuré pour :

diviser le temps de chauffage estimé en une pluralité de fenêtres temporelles longues ;
déterminer un taux de changement de température cible à l'intérieur de chaque fenêtre temporelle longue ;
diviser au moins une fenêtre temporelle longue de la pluralité de fenêtres temporelles longues en une pluralité de fenêtres temporelles courtes ;
déterminer un taux de changement de température cible à l'intérieur de chaque fenêtre temporelle courte pour atteindre le taux de changement de température cible au cours de la au moins une fenêtre temporelle longue ;
déterminer une puissance supplémentaire nécessaire, à fournir par le moteur (10), pour alimenter l'élément chauffant (108) en fonction d'une énergie cible du composant de post-traitement (130, 140, 150) à l'intérieur de chaque fenêtre temporelle courte ; et
transmettre un signal au moteur (10) pour demander la puissance supplémentaire nécessaire, à fournir par le moteur (10).

2. Dispositif de commande selon la revendication 1, dans lequel:
le taux de changement de température cible à l'intérieur de chaque fenêtre temporelle longue est déterminé sur la base d'une température initiale du composant de post-traitement à un début de la fenêtre temporelle longue, de la température cible, et du temps de chauffage estimé.

3. Dispositif de commande selon la revendication 1, en outre configuré pour :

suivre une énergie effective du composant de post-traitement à l'intérieur de chaque fenêtre temporelle courte ;
ajuster la puissance supplémentaire demandée au moteur à partir d'une première fenêtre temporelle courte jusqu'à une seconde fenêtre temporelle courte sur la base de l'énergie effective et de l'énergie cible du composant de post-traitement à l'intérieur de la première fenêtre temporelle courte ; et
ajuster le taux de changement de température cible à partir d'une première fenêtre temporelle longue jusqu'à une seconde fenêtre temporelle longue sur la base d'une température effective et de la température cible du composant de post-traitement à l'intérieur de la première fenêtre temporelle longue.

4. Dispositif de commande selon la revendication 1 ou 2, en outre configuré pour :
ajuster la puissance supplémentaire demandée au moteur sur la base d'une limite de puissance de l'élément chauffant, d'une température courante du composant de post-traitement, de la température cible, et du temps de chauffage estimé.

5. Dispositif de commande selon la revendication 1 ou 2, dans lequel :

le composant de post-traitement comprend un système de réduction catalytique sélective (SCR) ;
la température cible comprend une température de lit de SCR cible du système de SCR ; et le dispositif de commande est en outre configuré pour :

déterminer un rendement de conversion catalytique du système de SCR et une quantité de $NO_X$ de sortie de moteur de gaz $NO_X$ inclus dans le gaz d'échappement, et
déterminer la température de lit de SCR cible sur la base du rendement de conversion catalytique du système de SCR et de la quantité de $NO_X$ de sortie de moteur.

6. Dispositif de commande selon la revendication 5, dans lequel :

le temps de chauffage estimé est un temps de chauffage de SCR estimé pour chauffer le système de SCR jusqu'à la température de lit de SCR cible ; et
le dispositif de commande est en outre configuré pour :

déterminer le temps de chauffage de SCR estimé sur la base d'une température de lit de SCR courante du système de SCR et de la température de lit de SCR cible,

démarrer une temporisation simultanément avec l'initiation de la gestion thermique,

en réponse au fait que la temporisation atteint le temps de chauffage de SCR estimé et que la température de lit de SCR courante est toujours inférieure à la température de lit de SCR cible, déterminer un nouveau temps de chauffage de SCR estimé sur la base de la température de lit de SCR courante et de la température de lit de SCR cible,

réinitialiser et redémarrer la temporisation, et

ajuster la puissance supplémentaire demandée au moteur sur la base du nouveau temps de chauffage de SCR estimé, de la température de lit de SCR courante, et de la température de lit de SCR cible.

**7.** Dispositif de commande selon la revendication 1, dans lequel :

le composant de post-traitement comprend un filtre disposé en aval de l'élément chauffant et un système de SCR disposé en aval du filtre ;

le temps de chauffage estimé est un temps de chauffage de SCR estimé pour chauffer le système de SCR jusqu'à une température de lit de SCR cible ; et

le dispositif de commande est en outre configuré pour :

déterminer le temps de chauffage de SCR estimé sur la base d'une température de lit de SCR courante du système de SCR et de la température de lit de SCR cible,

déterminer un temps de chauffage de filtre estimé pour chauffer le filtre sur la base d'une température de sortie de filtre cible et d'une température de sortie de filtre courante, et

ajuster la puissance supplémentaire demandée au moteur sur la base du temps de chauffage de SCR estimé, de la température de lit de SCR cible, du temps de chauffage de filtre estimé, et de la température de sortie de filtre cible.

**8.** Dispositif de commande selon la revendication 7, en outre configuré pour :

en réponse au fait que la température de lit de SCR courante est inférieure à la température de lit de SCR cible, déterminer la température de sortie de filtre cible sur la base de la température de lit de SCR cible et d'une valeur de décalage de température de filtre, la valeur de décalage de température de filtre étant basée sur : (1) une température ambiante, et (2) une perte de température due à une insertion d'un réducteur dans le gaz d'échappement.

**9.** Dispositif de commande selon la revendication 7 ou 8, en outre configuré pour :

en réponse au fait que la température de lit de SCR courante est égale ou supérieure à la température de lit de SCR cible, déterminer la température de sortie de filtre cible sur la base de la température de lit de SCR cible et d'une valeur de décalage de température de filtre, la valeur de décalage de température de filtre étant basée sur une différence positive moyenne entre la température de sortie de filtre courante et la température de lit de SCR courante au cours d'une période de temps.

**10.** Dispositif de commande selon l'une quelconque des revendications 7 à 9, dans lequel :

le composant de post-traitement comprend également un catalyseur d'oxydation disposé en aval de l'élément chauffant et en amont du filtre ; et

le dispositif de commande est en outre configuré pour :

déterminer un temps de chauffage de filtre estimé pour que le filtre atteigne une température de sortie de filtre cible basée sur une température de sortie de catalyseur d'oxydation cible et une température de sortie de catalyseur d'oxydation courante, et

ajuster la puissance supplémentaire demandée au moteur sur la base également du temps de chauffage de filtre estimé et de la température de sortie de filtre cible.

**11.** Dispositif de commande selon la revendication 10, en outre configuré pour :

en réponse au fait que la température de sortie de filtre courante est inférieure à la température de sortie de filtre cible, déterminer la température de sortie de catalyseur d'oxydation cible sur la base de la température de sortie de filtre cible et d'une valeur de décalage de température de catalyseur d'oxydation, la valeur de décalage de température de catalyseur d'oxydation étant basée sur une température ambiante et une température de lit de filtre courante du filtre.

**EP 4 234 902 B1**

12. Dispositif de commande selon la revendication 10 ou 11, en outre configuré pour :

en réponse au fait que la température de sortie de filtre courante est égale ou supérieure à la température de sortie de filtre cible, déterminer la température de sortie de catalyseur d'oxydation cible sur la base de la température de sortie de filtre cible et d'une valeur de décalage de température de catalyseur d'oxydation,

la valeur de décalage de température de catalyseur d'oxydation étant une différence positive moyenne entre la température de sortie de catalyseur d'oxydation courante et la température de sortie de filtre courante au cours d'une période de temps.

13. Dispositif de commande selon une quelconque revendication précédente, dans lequel :

le composant de post-traitement comprend un catalyseur d'oxydation disposé en aval de l'élément chauffant, un filtre disposé en aval du catalyseur d'oxydation, et un système de SCR disposé en aval du filtre ; et

le dispositif de commande est configuré pour :

déterminer une énergie de chauffage de SCR, une énergie de chauffage de filtre, et une énergie de chauffage de catalyseur d'oxydation pour que le système de SCR, le filtre, et le catalyseur d'oxydation, respectivement, atteignent leurs températures cibles, et

déterminer la puissance supplémentaire nécessaire, à fournir par le moteur, en fonction de l'énergie de chauffage de SCR déterminée, de l'énergie de chauffage de filtre déterminée, et de l'énergie de chauffage de catalyseur d'oxydation déterminée.

14. Dispositif de commande selon la revendication 13, en outre configuré pour :

déterminer une puissance de chauffage moyenne sur la base d'une somme de l'énergie de chauffage de SCR déterminée, de l'énergie de chauffage de filtre déterminée, et de l'énergie de chauffage de catalyseur d'oxydation déterminée au cours du temps de chauffage estimé ;

déterminer une puissance totale nécessaire au moteur par l'ajout d'une puissance nécessaire au moteur par chacun du catalyseur d'oxydation, du filtre, et du système de SCR sur la base de l'énergie de chauffage de SCR déterminée, de l'énergie de chauffage de filtre déterminée, et de l'énergie de chauffage de catalyseur d'oxydation déterminée, respectivement ;

en réponse au fait que la puissance totale déterminée est égale à zéro ou inférieure à la puissance de chauffage moyenne déterminée et qu'une température de lit de SCR courante du système de SCR est inférieure à une température de lit de SCR cible, demander la puissance totale en tant que la puissance supplémentaire nécessaire, à fournir par le moteur ; et

au moins l'un parmi : (1) demander une puissance à l'élément chauffant sur la base de la puissance de chauffage moyenne ; et (2) provoquer une insertion d'hydrocarbures dans le catalyseur d'oxydation pour obtenir une puissance du catalyseur d'oxydation sur la base de la puissance de chauffage moyenne.

15. Dispositif de commande selon une quelconque revendication précédente, en outre configuré pour :

en réponse à la détermination qu'un débit du gaz d'échappement est inférieur à un seuil, déterminer une température d'élément chauffant estimée ; et

déterminer une limite de puissance d'élément chauffant sur la base de la température d'élément chauffant estimée de manière à désactiver l'élément chauffant lorsqu'une puissance de l'élément chauffant atteint la limite de puissance d'élément chauffant.

16. Dispositif de commande selon une quelconque revendication précédente, en outre configuré pour :

ajuster une limite de puissance d'élément chauffant de l'élément chauffant sur la base de changements de la température d'élément chauffant estimée.

17. Procédé (300) pour une gestion thermique d'un système de post-traitement (100) avec un dispositif de commande (170) selon la revendication 1, le système de post-traitement (100) comprenant un élément chauffant (108) et un composant de post-traitement (130, 140, 150) disposé en aval de l'élément chauffant (108), le système de post-traitement (100) étant relié à un moteur (10) qui génère un gaz d'échappement, le procédé (300) comprenant :

la détermination, par un dispositif de commande (170), d'un temps de chauffage estimé pour chauffer le composant de post-traitement (130, 140, 150) jusqu'à une température cible par l'intermédiaire de l'élément chauffant (108) ;

l'activation, par le dispositif de commande (170), de l'élément chauffant (108) ;
**caractérisé en ce que** le procédé comprend en outre :

la division, par le dispositif de commande (170), du temps de chauffage estimé en une pluralité de fenêtres temporelles longues ;

la détermination, par le dispositif de commande (170), d'un taux de changement de température cible à l'intérieur de chaque fenêtre temporelle longue ;

la division, par le dispositif de commande (170), d'au moins une fenêtre temporelle longue de la pluralité de fenêtres temporelles longues en une pluralité de fenêtres temporelles courtes ;

la détermination, par le dispositif de commande (170), d'un taux de changement de température cible à l'intérieur de chaque fenêtre temporelle courte pour atteindre le taux de changement de température cible au cours de la au moins une fenêtre temporelle longue ;

la détermination, par le dispositif de commande (170), d'une puissance supplémentaire nécessaire, à fournir par le moteur (10), pour alimenter l'élément chauffant (108) en fonction d'une énergie cible du composant de post-traitement (130, 140, 150) à l'intérieur de chaque fenêtre temporelle courte ; et

la transmission, par le dispositif de commande (170), d'un signal au moteur (10) pour demander la puissance supplémentaire nécessaire, à fournir par le moteur (10).

18. Procédé selon la revendication 17, dans lequel :
la détermination du taux de changement de température cible à l'intérieur de chaque fenêtre temporelle longue est basée sur une température initiale du composant de post-traitement à un début de la fenêtre temporelle longue, la température cible, et le temps de chauffage estimé.

19. Procédé selon la revendication 17, comprenant en outre :

le suivi, par le dispositif de commande, d'une énergie effective du composant de post-traitement à l'intérieur de chaque fenêtre temporelle courte ;

l'ajustement, par le dispositif de commande, de la puissance supplémentaire demandée au moteur à partir d'une première fenêtre temporelle courte jusqu'à une seconde fenêtre temporelle courte sur la base de l'énergie effective et de l'énergie cible du composant de post-traitement à l'intérieur de la première fenêtre temporelle courte ; et

l'ajustement, par le dispositif de commande, du taux de changement de température cible à partir d'une première fenêtre temporelle longue jusqu'à une seconde fenêtre temporelle longue sur la base d'une température effective et de la température cible du composant de post-traitement à l'intérieur de la première fenêtre temporelle longue.

20. Procédé selon la revendication 17 ou 18, comprenant en outre :
l'ajustement, par le dispositif de commande, de la puissance supplémentaire demandée au moteur sur la base d'une limite de puissance de l'élément chauffant, d'une température courante du composant de post-traitement, de la température cible, et du temps de chauffage estimé.

FIG. 1

FIG. 2

**Controller**
**170**

Processor
172

Memory
174

Enable Module
173

SCR Target Determination Module
174a

SCR Bed Target

SCR TM Request

SCR TM Time

SCR Energy Management Module
174d

SCR Power Request

SCR In Target

Filter Target Determination Module
174b

Filter Out Target

Filter TM Request

Filter TM Time

Filter Energy Management Module
174e

Filter Power Request

Filter In Target

Oxidation Catalyst Target Determination Module
174c

DOC Out Target

DOC TM Request

DOC TM Time

Oxidation Catalyst Energy Management Module
174f

DOC Power Request

Aftertreatment (AFT) Energy Management Module
174g

Abort Module
175

Communication Interface
176

TM Energy, Power and Time

Heater Power Limit

TM Mode Request

Heater Power Request

HC Power Request

EP 4 234 902 B1

36

**FIG. 3A**

**FIG. 3B**

**FIG. 4**

EP 4 234 902 B1

FIG. 5

DEF ──────▶ DEF

Flow ──────▶ Flow

SCR Bed T ──────▶ SCR Bed T

AMT ──────▶ AMT

Enable ──────▶ Enable

Abort ──────▶ Abort

NOx In Status ──────▶ NOx In Status

NOx Out Status ──────▶ NOx Out Status

Sys Ready ──────▶ Sys Ready

NOx in ──────▶ NOx in

NOx out ──────▶ NOx out

DPF Out T ──────▶ DPF Out T

DPF Target T ──────▶ DPF Target T

SCR Target ──────▶ SCR Target

SCR TM Time ──────▶ SCR TM Time

SCR TM Trig ──────▶ SCR TM Trig

SCR SW Start ──────▶ SCR SW Start

SCR LW Start ──────▶ SCR LW Start

SCR LW Time ──────▶ SCR LW Time

SCR TM Request ──────▶ SCR TM Request

174a

**FIG. 6A**

174a

single
5 → DPFOutT
DPFOutT

[Abort] boolean → Abort
KWOfst single

[SCRTrgi] single → Trgi
SCR Keep Warm
Offset

[Enbl] boolean → Enbl
KWEnbl boolean

[SCRBedT] single → BedT    174a1

KeepWarmOfst

[SCRBedT] single → SCRBedT

boolean
5 → [Enbl]
Enable

AMT single
4 → AMT
Ambient
Offset
AMTO1st single

174a2

AmbientOffset

boolean
6 → [Abort]
Abort

DEF single
1 → DEF
DEF
DEF    174a3
Temperature
Offset
DEFOfst single

Flow single
2 → AMT

DEFOffset

C_AEM_trc_SCR_BedTarget single

[Enbl] boolean → Enbl

[Abort] boolean → Abort

NOxIn single
10 → NOxIn
NOxIn

NOxOut single
11 → NOxOut
NOxOut

NOxInStatus boolean
7 → NOxInStatus
NOxInStatus

inl16
8 → NOxOutStatus
NOxOutStatus

SysReady boolean
9 → SysReady
SysReady

SCR Bed Temperature
Target Adjustment

BedTOfset single

[SCRBedT] single

[Enbl] boolea

[Abort] boolea

single
9 → BedT
SCRBedT    174a4

SCRBedTAdj

[SCRBedT]

**FIG. 6B**

174a

(global)
V_AEM_trc_SCR_InTrgtOfst

(global)
V_AEM_trc_SCR_InTrgt

single

T

T

single

[Enbl] boolean

single

F

0 single

F

[SCRTrgt] single

+

+

single

1

SCRinTrgt

[SCRTrgt]

2

[SCRBedTrgt]

(global)
V_AEM_trc_SCR_BedTarget

3

SCRTMTime

| SCRBedTarget | TimeTrgt | single |
| SCRBedT | | |
| Enbl | Request | |
| | TM | TMRqst |
| Abort | | TMTigger |

8

SCRTMRqst

174a6

TMRqst SWStart boolean

5

SCRSWStart

TMTrig LWinStart boolean

6

SCRLWStart

Window
Determination

boolean

4

SCRTMTrig

[Abort] boolean

Abort LWinTime single

7

SCRLWTime

174a5

RequestTM

Window

**FIG. 6B Cont.**

DPF Out Target ——→ DPF Out Target          DPFInTrgt ——→ DPF In Target

DOC Out T ——→ DOCOutT                       DPFTMTime ——→ DPF TM Time

DPF Out T ——→ DPFOutT      174b             DPFTMTrig ——→ DPF TM Trig

AMT ——→ AMT                                 DPFSWStart ——→ DPF SW Start

Enable ——→ Enable                           DPFLWStart ——→ DPF LW Start

Abort ——→ Abort                             DPFLWTime ——→ DPF LW Time

                                            DPF TMRqst ——→ DPF TM Request

DPFTimerTarget

**FIG. 7A**

FIG. 7B

FIG. 7B Cont.

FIG. 8A

FIG. 8B

**FIG. 9A**

**FIG. 9B**

174d

174d3

4
LWStart

Ω    LwPwTrgt

SCRTarget

174d3

SCRBedT         LwTRTrgt

Next Long Window
Power Request

5
LWinTime

TmRemain        LwinT

LWPwRqst

V_AEM_tm_SCR_TM_Remain

X

+

+

1
SCRPwrRqst

[Enbl]          Enbl

[SWStart]       SWStart

174d4

LwPwrTrgt

LwTRTrgt

Short Window
Energy Calculation

[InFlux]        InFlux

TmptrTrgt

[OutFlux]       OutFlux

SCRPwrRqst

[Abort]         Abort

[SCROutT]       SCROutT

[SCRBedT]       SCRBedT

[SCRTrgt]       FinalTrgt

13
SCRTMRqst       SCRTMRqst

SWEnergy

**FIG. 9B Cont.**

DPF Out Target → DPFOutTarget

DPF TM Time → DPFTMTime

Enable → Enabl

DPF LW Start → DPFLWStart

DPF SW Start → DPFSWStart

Abort → Abort

DOC Out T → DOCOutT

DPF Out T → DPFOutT

Flow → Flow

DPF TM Trig → SCRTMReg

DPF LW Time → DPFLWTime

DPF TM Req → DPFTMReq

174e

→ DPF Pwr Req

DPFEnergyManager

**FIG. 10A**

FIG. 10B

**FIG. 10B Cont.**

DPF In Target → DOCOutTarget
DOC TM Time → DOCTMTime
Enable → Enabl
DOC LW Start → DOCLWStart
DOC SW Start → DOCSWStart
Abort → Abort
DOC In T → DOCOutT
DOC Out T → DOCOutT
Flow → Flow
DOC TM Trig → DOCTMReg
DOC LW Time → DOCLWTime
DOC TM Req → DOCTMReq

174f

X → DOC Power Req

DOCEnergyManager

**FIG. 11A**

EP 4 234 902 B1

FIG. 11B

174f

1
DOCPwrRqst

[Enbl] → Enbl
174f4

[SWStart] → SWStart

DOCTarget        LwPwTrgt → LwPwrTrgt

174f3

DOCOutT        LwTRTrgt → LwTRTrgt

Next Long Window        Short Window
Power Request        Energy Calculation

X    +        TmptrTrgt

11
DOCLWinTime    +

TmRemain        LwinT    +    [InFlux] → InFlux

LWPwrRqst

[OutFlux] → OutFlux

V_AEM_tm_DOC_TM_Remain        PwrRqst

[Abort] → Abort

DOCOutT] → DOCOutT

[DOCTrgt] → FinalTrgt

12        SOCTMRqst
DOCTMRqst        SWEnergy

**FIG. 11B Cont.**

174g

**ReqEnergy (174g1)**

| Input | Port |
|---|---|
| Enable → | Enabl |
| SCR TM Reg → | SCRTMReg |
| SCR TM Trig → | SCRTMTrig |
| SCR Target → | SCRBedTarget |
| SCR Bed T → | SCRBedT |
| SCR TM Time → | SCRTMTime |
| DPF Target T → | DOCTarget |
| DPF Out T → | DPFOutT |
| DPF In Target → | DOCTarget |
| DOC Out T → | DOCOutT |
| DPF TM Trig → | DPFTMTrig |
| DOC TM Trig → | DOCTMTrig |
| DPF TM Req → | DPFTMReq |
| DOC TM Req → | DOCTMReg |
| DPF TM Time → | DPFTMTime |
| DOC TM Time → | DOCTMTime |

Energyreq → Energy req

Time reqd → TM Time

**AFTEnergyManager (174g2)**

| Input | Port |
|---|---|
| | EnergyReq |
| DOC Pwr Req → | DOCPwrReq |
| DPF Pwr Req → | DPFPwrReq |
| SCR Pwr Req → | SCRPwrReq |
| Htr Pwr Limit → | HtrPwrLimit |
| DOC In T → | DOCInT |
| DPF Out T → | DPFOutT |
| Flow → | Enbl |
| SCR Bed T → | SCRBedT |
| SCR Target T → | SCRTarget |
| | Timereqd |
| DOC In T → | DOCInT |
| Htr In T → | HtrInT |
| Htr Pwr → | HtrPwr |

AFT Pwr Req → AFTPwrReq

HeaterPwrReq → Heater Pwr Req

HCPwrreq → HC Pwr req

**FIG. 12**

200

Aftertreatment system including heater, oxidation catalyst, filter, and SCR system

202

Determine catalytic conversion efficiency of the SCR system

204

Determine a target SCR bed temperature based on the catalytic conversion efficiency and EONOx

206

Determine an estimated SCR warmup time for the SCR system to reach the target SCR bed temperature

208

Determine a filter temperature offset value

210

Determine a target filter outlet temperature based on the target SCR bed temperature and the filter temperature offset value

212

Determine an oxidation catalyst temperature offset value

214

Determine a target oxidation catalyst outlet temperature based on the target filter outlet temperature and the oxidation catalyst temperature offset value

A

**FIG. 13A**

200

A

Determine an estimated filter warmup time for the filter to reach the target filter outlet temperature based on a current filter outlet temperature — 216

Determine a target filter inlet temperature based on the target oxidation catalyst outlet temperature and the estimated filter warmup time — 218

Determine an estimated oxidation catalyst warmup time for the oxidation catalyst to reach the target oxidation catalyst outlet temperature — 220

Determine energy needed for the aftertreatment system based on the target SCR bed, filter outlet, and the oxidation catalyst outlet temperatures and their respective estimated warmup times — 222

Determine power need from heater and/or oxidation catalyst based on the determined energy — 224

Activate heater — 226

Request additional power needed from engine to obtain desired determined power needed from heater and/or oxidation catalyst — 228

**FIG. 13B**

300

Aftertreatment system including heater, oxidation catalyst, filter, and SCR system

Determine an estimated warmup time for each component of the aftertreatment system to reach a target temperature  302

Divide the estimated warmup time into a plurality of long time windows  304

Determine a target temperature change rate within each long time window  306

Divide the each long time window into a plurality of short time windows  308

Determine a target energy change rate within each short time window for achieving the target temperature change rate over the long time window  310

Request additional power from an engine based on a target energy of each component within each short time window  312

Monitor actual energy of each component within each short time window  314

Adjust requested power from a first short time window to a second short time window based on actual energy and target energy of each component within the first short time window  316

Adjust target temperature change rate from a first long time window to a second long time window based on an actual and a target temperature of aftertreatment components within first long time window  318

FIG. 14

**EP 4 234 902 B1**

**Patent documents cited in the description**

- DE 102005013707 A1
- US 2020408163 A1
- US 2019155230 A
- DE 102019215698 B3
- DE 102018217169 A1
- DE 102012007053